(19)

**Europäisches Patentamt**

**European Patent Office**

**Office européen des brevets**

(11)  **EP 2 644 510 B1**

(12)  **EUROPEAN PATENT SPECIFICATION**

(45) Date of publication and mention
of the grant of the patent:
**30.05.2018   Bulletin 2018/22**

(51) Int Cl.:
***B64F 5/40*** *(2017.01)*

(21) Application number: **12162261.7**

(22) Date of filing: **29.03.2012**

(54) **Method for treating aircraft structures**

Verfahren zur Behandlung von Flugzeugstrukturen

Procédé pour traiter des structures d'aéronef

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.10.2013   Bulletin 2013/40**

(73) Proprietor: **RUAG Australia Pty Ltd
Bayswater, Victoria 3153 (AU)**

(72) Inventors:
• **Matthews, Neil
Selby, Victoria 3159 (AU)**
• **Jones, Rhys
Blackburn South, Victoria 3130 (AU)**

(74) Representative: **Walker, Ross Thomson
Forresters IP LLP
Skygarden
Erika-Mann-Strasse 11
80636 München (DE)**

(56) References cited:
• **R. Jones, N. Matthews, C.A Rodopoulos, K. Cairns, S. Pitt: "On the use of supersonic particle deposition to restore the structural integrity of damaged aircraft structure", , 30 March 2011 (2011-03-30), XP002686098, Retrieved from the Internet: URL:http://www.sciencedirect.com/science/article/pii/S0142112311000892 [retrieved on 2012-10-28]**

Description

FIELD OF THE INVENTION

The present invention relates to the field of aircraft manufacture and repair; and also to preventative maintenance of aircraft. In particular, the invention relates to the prevention of structural weaknesses and environmental degradation in aircraft fuselages and other structures.

BACKGROUND TO THE INVENTION

The fuselages of many aircraft consist of circumferential frame members, longitudinal stringers, and a thin skin, all made from lightweight aluminium. This construction allows for a balance of flight properties and weight.

The sheets of aluminium that make up the skin are connected together as lap joints by generally two to three rows of rivets. The outer skin later is countersunk at each rivet location so the rivet head is flush with the skin, resulting in optimal aerodynamic properties.

When the skin is subjected to the stresses of normal operation, particularly in pressurized commercial aircraft, fatigue damage can occur in the metal sheets and especially in high stress locations around fasteners. The problem is exacerbated by the ingress of environmental elements and leads to the joint cracking. Crack growth, if left undetected, can lead to catastrophic failure, as in the case of Aloha Airlines Flight 243 in 1988. As the aircraft reached its normal flight altitude of 24,000 feet (7,300 m), a small section on the left side of the roof ruptured. The resulting explosive decompression tore off a large section of the roof, consisting of the entire top half of the aircraft skin extending from just behind the cockpit to the fore-wing area. It was subsequently discovered that the incident was caused by the presence of multiple small cracks which arose as a result of environmental degradation of the joint located aft of the front port side passenger door. This phenomena has subsequently been termed "multi-site damage" (msd). Since the Aloha incident, aircraft operators have been directed to regularly check for the presence of cracks and msd in the fuselage skin. In order to identify the presence of cracks before they reach critical lengths, various inspection techniques are utilized.

While visual inspection is an important part of the detection process, many naturally occurring cracks in their initiation are simply too small to see or otherwise detect. To assist with the detection of these small and hidden cracks, non-destructive inspection (NDI) methods are used. NDI methods can also be used to detect cracks that exist under paint and detect areas of corrosion between the layers of skin. Some of the more common NDI methods used in aircraft fuselage crack detection are ultrasound and eddy current methods. These methods are not capable of detecting all cracks and are particularly poor in detecting small naturally occurring defects.

After the Aloha Airlines Flight 243 accident, all 737's with over 50,000 cycles were required to have their lap joints reinforced with external sheet metal patches. This modification is costly, and takes about 15,000 man hours.

Furthermore in April 2011 a fuselage lap joint in a Southwest Airlines Boeing 737-300 aircraft tore an 18 inch hole (approx. 457 mm) in the roof, and led to the grounding of 79 of its older Boeing 737 aircraft for inspections [38, 39]. This resulted in the cancellation of almost 700 flights [38, 39]. These inspections, which found cracks in a total of four Southwest aircraft, [38] led to the US FAA (Federal Aviation Administration) mandating the inspection of 175 737 aircraft that had experienced more than 35,000 cycles. There are more than 931 similar aircraft worldwide. The problem is not confined to 737 and 727 aircraft. On 26th October 2010 an American Airlines 757-200 aircraft was forced to land at Miami International Airport due to a sudden decompression arising from cracking in a fuselage joint. This aircraft had experienced less than 23,000 cycles. This led to the discovery of cracking in other 757 aircraft and a January 2011 FAA Airworthiness directive [40] mandating the inspection of all 757-200 and 757-300 aircraft.

Environmental degradation and subsequent crack initiation and progression is not just of importance to commercial airlines. Military aircraft, particularly those with advanced age, can also develop environmental degradation and cracking at fastener holes. As the military attempts to keep its fleet flight-worthy for longer periods of time, additional prevention, inspection, and mitigation methods are being developed to prevent both environmental degradation and catastrophic failure.

When cracks are discovered, they are typically repaired by the application of external sheet metal patches. Again, this is a costly and time consuming process. A further problem is that the application of patches may actually initiate a weakness in the underlying structure. Such undetected and undetectable cracks can compromise the safety of the fuselage/wing skin. These repairs can also locally overstiffen the structure and result in catastrophic failure in the fuselage/wing skin as a result of a crack running from repair to repair.

Externally composite bonded repairs have been developed to address this problem. However, these repairs do not prevent the ingress of moisture and hence do not alleviate environmental degradation of the structure. Furthermore, to ensure a durable bond the structure needs to be heated to approximately 120 C. Additionally, composite bonded repairs cannot be used in regions where there is a tight radius of curvature.

Examples of repairs performed, inter alia, by means of supersonic particle deposition (SPD) can be found in the references cited at the end of this description, and more particularly in the article by R. Jones et al. titled "On the use of supersonic particle deposition to restore the structural integrity of damaged aircraft structure" (see the following URL: http://www.sciencedirect.com/science/article/pii/ S0142112311000892). It is an aspect of the present invention to overcome or alleviate a problem of the prior art by providing a method for preventing a structural weakness in an aircraft structure. A further aspect of the present invention is to overcome or alleviate a problem of the prior art by providing a method for preventing environmental degradation in an aircraft structure.

The discussion of documents, acts, materials, devices, articles and the like is included in this specification solely for the purpose of providing a context for the present invention. It is not suggested or represented that any or all of these matters formed part of the prior art base or were common general knowledge in the field relevant to the present invention as it existed before the priority date of each provisional claim of this application.

## SUMMARY OF THE INVENTION

In a first aspect the present invention provides a method for preventing or inhibiting the initiation of a structural weakness, in an aircraft structural joint or riveted repair according to claim 1, wherein the bonding of a plurality of particles to the structure is achieved by a cold spray process. In one embodiment the method is for preventing the ingress of an environmental element into an aircraft structural joint or riveted repair. In a second aspect the present invention provides an aircraft structural joint or riveted repair according to claim 9. In one embodiment, the layer is capable of preventing the ingress of an environmental element in the aircraft structural joint or riveted repair. In one embodiment of the structure the substantially continuous metallic layer is deposited on the surface of the aircraft structure by a method as described herein.

In one embodiment of the method or structure, at least a proportion, or substantially all, of the particles are metallic particles.

In one embodiment of the method or structure, the bonding does not involve melting or fusing of the particles.

In one embodiment of the method or structure, the bonding by a cold spray process according to the invention is preferably achieved by supersonic particle deposition. In one embodiment of the method or structure, the substantially continuous layer is at least about 0.05 mm.

In one embodiment of the method or structure, the substantially continuous layer has substantially even depth across the application surface.

In one embodiment of the method or structure, the aircraft structure is a fuselage component, such as a sheet metal, and may be a lap joint. Where the structure is a lap joint the substantially continuous layer does not extend to cover a junction between the free end of a sheet metal component of the lap joint.

In one embodiment, the structural weakness is a crack.

## BRIEF DESCRIPTION OF THE DRAWINGS

FIG 1 is a diagram showing the geometry of an edge notched panel, being a 2024T3 test specimen. Material is: Aluminium Alloy 2024T3 AlClad 350 mm x 100 mm x 1.27 mm (0.050").

FIG 2 is a diagram showing the geometry of the panel of FIG 1 with an SPD doubler.

FIG 3 is a photograph in plan view of a test panel being 2024T3 with SPD doubler.

FIG 4 is an IR thermal image showing the stresses is an SPD doubler at 11,100 cycles (units in MPa).

FIG 5 is an IR thermal image showing the stresses is an SPD doubler at 56,100 cycles (units in MPa).

FIG 6 is a graph showing crack growth histories in SENT tests.

FIG 7 is a diagram showing the location of an SPD strip repair on a 2024T3 test specimen.

FIG 8 is a photograph showing cross-section of an SPD strip.

FIG 9 is an IR thermal image showing the stress field in the skin and the SPD strip (units in MPa).

FIG 10 is an IR thermal image showing stresses in an SPD at 3000 cycles (units in MPa).

FIG 11 is an IR thermal image showing stresses in an SPD at 33,000 cycles (units in MPa).

FIG 12 is an IR thermal image showing stresses in an SPD at 35,500 cycles (units in MPa).

FIG 13 is an IR thermal image showing dissipated energy at 33,500 cycles (units in MPa).

FIG 14 is a graph showing measured crack length histories with and without an SPD patch.

FIG 15 is a graph showing measured and predicted crack length histories for the SENT specimen with an SPD patch.

FIG 16 is a diagram showing repair configuration: (a) plan view, (b) cross-section along centre line, i.e. x = 0.

FIG 17 shows two images of (a) Cu (bright) on an Al substrate, from [22], and (b) AlZn onto an Al substrate, from [23].

FIG 18 is a schematic diagram demonstrating the stresses used to determine K.

FIG 19 is a diagram of a typical finite element mesh of the cracked structure and the associated SPD repair. The crack in the base structure (plate) is shown in a different colour to the SPD and the remainder of the cracked plate.

FIG 20 is a photograph showing two SPD strips on either side of a 20 mm long central crack in a rib stiffened panel.

FIG 21 is a photograph of a delaminated surface of an SPD strip (A), which was 20 mm wide, showing locations where the fractal dimensions were measured.

FIG 22 is a photograph of a delaminated surface of an SPD strip (B), which was 20 mm wide, showing locations where the fractal dimensions were measured.

FIG 24 is a schematic diagram of a fuselage lap joint specimen.

FIG 25 is the SPD application specification.

Fig 26 shows stresses, in MPa, at the critical rows of fasteners in a baseline specimen.

Fig 27 shows stresses, in MPa, prior to link up.

FIG 28 shows stresses, in MPa, in the joint after approximately 6,500 cycles (Baseline No SPD).

Fig 29 shows stresses, in MPa, at approximately 29,000 cycles (Baseline No SPD).

FIG 30 shows stresses in the SPD over the fasteners at 92,000 cycles (Test Panel 1).

FIG 31 shows stresses, in MPa, in the lap joint specimen at 18,000 cycles (Test Panel 2).

FIG 32 shows stresses, in MPa, in the lap joint specimen at 48,000 cycles (Test Panel 2).

## DETAILED DESCRIPTION OF THE INVENTION

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure , in one or more embodiments if thereby remaining within the scope of the invention as defined by the claims. Similarly it should be appreciated that the description of exemplary embodiments of the invention, various features of the invention are sometimes grouped together in a single embodiment, figure, or description thereof for the purpose of streamlining the disclosure and aiding in the understanding of one or more of the above-mentioned aspects. This method of disclosure, however, is not to be interpreted as reflecting an intention that the claimed invention requires more features than are expressly recited in each claim. Rather, as the following claims reflect, inventive aspects may lie in less than all features of a single foregoing disclosed embodiment. Thus, the claims following the Detailed Description are hereby expressly incorporated into this Detailed Description and serve to define the scope of this invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

In the claims below and the description herein, any one of the terms "comprising", "comprised of" or "which comprises" is an open term that means including at least the elements/features that follow, but not excluding others. Thus, the term comprising, when used in the claims, should not be interpreted as being limitative to the means or elements or steps listed thereafter. For example, the scope of the expression a method comprising step A and step B should not be limited to methods consisting only of methods A and B. Any one of the terms "including" or "which includes" or "that includes" as used herein is also an open term that also means including at least the elements/features that follow the term, but not excluding others. Thus, "including" is synonymous with and means "comprising".

In a first aspect the present invention provides a method according to claim 1. In some embodiments of the structure, the method is for (in addition to the application recited *supra*), preventing the ingress of an environmental element into an aircraft structural joint or riveted repair. Embodiments having the above-mentioned application are particularly advantageous given the significant advantages provided in terms of extended life of the aircraft structures. Accordingly, a preferred form of the method provides that the method is for preventing or inhibiting the initiation of a structural weakness in an aircraft structural joint or riveted repair and preventing the ingress of an environmental element. The Patent Proprietor has discovered that the deposition of a substantially continuous layer of particles over an area of structural weakness (or potential structural weakness) has a positive effect on the present or future structural integrity of the aircraft structure. It has also been shown that the layer is capable of sealing a substrate against the ingress of environmental elements, which in turn may lead to the development of a structural weakness. The deposition of a substantially continuous layer has been shown to seal joints, including mechanical repairs against the ingress of environmental elements such as water, salts, air, acidified rain and the like. Thus, application of the substantially continuous layer according to the invention has a preventative as well as restorative result.

As used herein, the term "repair" is not intended to be construed narrowly to mean that the structure must be returned precisely to its original state. It is contemplated that in some embodiments, the structure may be returned to a proportion of its original structural strength, or indeed or a multiple of its original strength.

The term "prevent" is not intended to be limited to circumstances where the initiation of a structural weakness is completely prevented. The initiation of the weakness may be delayed in time, or it may manifest as a less severe weakness at initiation.

The term "inhibit" is not intended to mean that progression of the structural weakness is completely inhibited. It may just mean that the progression is delayed, or that it progresses to an otherwise less severe weakness.

The term "structural weakness" is intended to mean any weakness in the structure (or in any part of the structure where the structure is multi-partite) that alters the ability of the structure to remain integral upon the application of a force. In the context of the present invention a structural weakness includes a crack, a split, a bend, a deformation, a tear, or damage occasioned by exposure to an environmental element on an aircraft structure in the course of service. It does not include any weakness deliberately inflicted on a structure, nor is the term intended to include any alteration in the geometry of a structure such as may be occasioned on a gearbox component, or an engine component, for example.

While the step of bonding may involve the melting and/or fusing of the particles (such as that involved in high velocity or low velocity oxygen fuel thermal spray coatings), preferred embodiments of the method do not involve melting or fusing of the particles. In one embodiment of the method, the step of bonding the plurality of particles is accomplished by bonding directly to the substrate (and also to each other) by the release of kinetic energy from the particles. The particles may acquire the kinetic energy by any means, but the energy is typically acquired by accelerating the particles to a high velocity toward the substrate. Upon impact with the substrate, the particles deform (typically flattening) and form a consolidated structure up to several centimetres thick.

Impact of the particles with a solid surface at sufficient velocity causes plastic deformation and bonding with the underlying material without the creation of heat affected zones which are typical of other deposition processes and which are undesirable in many structural applications. Bonding is a result of high strain rate deformation and adiabatic shear instabilities and the bond interface. Specific advantages of this technology include but are not limited to the following

a. SPD produces an excellent bond with the substrate

b. SPD can be used to create almost any required thickness.

c. SPD produces coatings with very few defects Reusable for reclamation of eroded surfaces and application of wear resistant coating. (SPD enables the continuing reuse of the base material).

d. Can be applied to recover damaged geometry without adversely affecting the substrate (no distortion, heat affected zones or embrittlement).

e. Initial trials have shown that it can be used to enhance structural integrity through localized strengthening which may reduce the initiation of cracks or propagation of cracks.

f. SPD can be used to seal a joint and a riveted repair against the ingress of environmental elements thereby alleviating the environmental degradation of the structure.

g. Significant reduction in occupational health and safety risks associated with a number of current in-service applied coatings (e.g. cadmium and hexavalent-chromium-containing compounds). Such embodiments of the method are operative at temperatures below the melting point of the particle used in the method. In some embodiments, the method is operative at a temperature of less than 90%, 80%, 70%, 60%, 50%, 40%, 30%, 20%, 10%, 9%, 8%, 7%, 6%, 5%, 4%, 3%, 2% or 1% of the melting point of the particle.

One particularly useful method for bonding particles (and particularly metallic particles) to the aircraft structure is a cold spray method. Cold spray methods are known in the art, and are characterized by the application of particles to a substrate at temperatures below the melting point of the particles. As used herein, the term "cold spray" is intended to include any coating process utilizing a high-speed gas jet to accelerate a plurality of particles toward a substrate whereby the particles consolidate on impact. In many cases, the process is conducted at a temperature that is substantially lower than the particle melting point.

The term 'cold spray' has been used to describe this process due to the relatively low temperatures of the expanded gas stream that exits the spray nozzle. After exiting the nozzle, the particles are impacted onto a substrate, where the solid particles deform and create a bond with the substrate. As the process continues, particles continue to impact and form bonds with the previously consolidated material resulting in a uniform deposit with very little porosity and high bond strength.

Since bonding of the powder to the substrate, as well as the cohesion of the deposited material, is accomplished in the solid state at low temperatures, the characteristics of the cold sprayed material is advantageous in the context of the present invention. Because particle oxidation as well as deleterious tensile stresses that occur during thermal contraction are minimized, the cold spray process has the ability to produce materials with comparatively superior bond strength to the substrate and greater cohesive strength.

The Examples herein demonstrate that fatigue performances of cracked metallic structures having a cold spray applied metallic layer under constant amplitude loading are significantly improved over untreated structures. The experimental data demonstrates that the baseline specimens accrued damage more rapidly and that crack growth was significantly greater than the corresponding treated panels. In the majority of tests cases the SPD-treated panels showed little evidence of damage/crack growth. A prediction of the fatigue performance of a treated single edge notch coupon was made using SIF values calculated via an approximate analysis and the resultant crack length history is in agreement with experimental data. Weight function solutions for repairs to centre cracked panels have also been developed and validated via three dimensional finite element analysis.

In some embodiments of the method the substantially continuous layer is formed by exposing the structure to a high velocity (typically between 300 and 1200 m/s) stream of solid-phase particles, which have been accelerated by a supersonic gas flow, typically nitrogen or helium, at a temperature that can range between about 400 and 900°C.

Cold spray processes are known by alternative names including supersonic particle Deposition (SPD); dynamic spray high velocity powder deposition, kinetic spraying, and Kinetic Energy Metallization.

The present invention is a significant departure from the accepted uses of cold spray technology. Previously, the method has been used as a coating, much like paint, or to restore geometries in worn parts. The use of the process to result in an aircraft structures having improved structural characteristics is an advance in the art, providing economic and safety advantages.

In one embodiment, the cold spray process is a low pressure cold spray process comprising injecting the plurality of particles in the diverging section of the spray nozzle from a low-pressure gas supply.

In low-pressure cold spray, air or nitrogen at relatively low pressure-80-140 psi (approx. 055 to 0.97 MPa)-is also preheated, up to 550°C, then forced through a DeLaval nozzle. At the diverging side of the nozzle, the heated gas is accelerated to about 600 m/s. Powder feedstock is introduced downstream in the diverging section and accelerated toward the substrate. As the applicability of cold spray technology expands to new and unique areas of application, there has been an increasing number of commercially available, ready-to-use cold spray systems introduced into the marketplace.

In high-pressure cold spray, helium or nitrogen at high pressure, up to 1,000 psi (approx. 6.89 MPa), is preheated--up to 1,000°C--and then forced through a converging-diverging DeLaval nozzle. At the nozzle, the expansion of the gas produces the conversion of enthalpy into kinetic energy, which accelerates the gas flow to supersonic regime-1,000 m/s-while reducing its temperature. The powder feedstock is introduced axially into the gas stream, prior to the nozzle throat. The accelerated solid particles impact the substrate with enough kinetic energy to induce mechanical and/or metallurgical bonding.

The skilled artisan appreciates that both high pressure and low pressure cold spray processes may be operable in the context of the present invention.

Of greater relevance than the pressure *per se* is the velocity at which the particles are propelled toward the substrate. Pressure is one parameter that will influence velocity, however other factors such as particle size and particle weight will have an effect. Typically, the process is operated such that the particles are propelled at or exceeding a minimum velocity that is sufficient to provide adhesion of particles, and/or provide an acceptable porosity in the resultant coating, and/or provide an acceptable deposition efficiency.

However, the velocity should not be so high as to damage the substrate, or result in the deflection of significant amounts of particles off the substrate or the building particulate layer.

Preferred velocities for a given application vary according to the powder type. For some powders a low pressure unit will generate a sufficient velocity to achieve the required adhesion, porosity or deposition efficiency. For aluminium powder (which is a preferred species of particle in the present method) a low pressure system may achieve the desired outcome if operated at its upper limits. However, it is more typical for a high pressure unit to be used in the present methods.

The skilled artisan is enabled to adapt a cold spray method to be operable in the context of the present methods. For example, where a particular hardness is required in the consolidated metal layer relatively simple particle impact models as applied to empirical models for flow stress and hardness may result in useful predications of the hardness resulting from a cold spray metallic powder deposition. In particular, reference is made to the modelling of Champagne et al (Modelling Simul. Mater. Sci. Eng. 18 (2010) 065011 (8pp)). These authors show that strain hardening of cold sprayed deposits is a result of the flattening of the particles as they impact and bond with the surface. Particle impact velocity is the principle controlled parameter of the cold spray process, where particle velocity and material properties determine particle flattening.

A constitutive model often used for high strain rate deformation is that of Johnson and Cook [5]. This model includes strain hardening, strain rate hardening and thermal softening effects during deformation.

A number of variables may be routinely manipulated to achieve a desired outcome for a particular application. While not all variables must necessarily be considered to achieve a desired outcome, some of which may be considered to include the following non-limiting parameters:

a. Substrate material

   i. Type
   ii. Condition

   iii. Surface Finish

  b. Powder

   i. Material Type
   ii. Material Condition
   iii. Size
   iv. Shape

  c. Application Nozzle

   i. Material Type
   ii. Nozzle Shape

  d. Carrier Gas

   i. Type

  e. Deposition Parameters

   i. Gas input pressure
   ii. Gas expansion temperature
   iii. Deposition flow rates
   iv. Deposition transition rates

The particles may compromise a single species of particle, or multiple species. The plurality of particles may be metallic particles, polymer particles or composite particles. For aircraft-related application the particles are typically metallic particles fabricated from any elementary or alloyed metal, including (but not limited to) aluminium, zinc, tin, copper, nickel, titanium, tantalum, cobalt, iron, niobium, molybdenum, and tungsten. Preferably the metallic particles are aluminium particles. The particles are typically utilized in the form of a commercially available powder, generally ranging in size from about 5 to about 100μm.

The choice of particle is within the ability of the skilled artisan. Generally, the particle is composed of the same material as the substrate.

In one embodiment of the method, the substantially continuous layer is substantially dense and/or substantially impervious to a liquid, including water, any polar solvent or any nonpolar solvent. An advantage of such layers is that weather is excluded from any underlying surface that would normally be prone to corrosion, this enhancing the operation life of the aircraft.

The method may be conducted such that a substantially continuous layer of particles of any depth is created. The skilled artisan will be capable of assessing a minimum required depth for any given structural result required. For example, where the structural weakness is minor or the aircraft structure is not a critical component, a lesser depth may be implemented. Conversely, a greater depth may be indicated where the structure has significant damage, or where the structure has minor damage but is expected to be exposed to high levels of stress during operation.

In some embodiments, the method is adapted to deposit a substantially continuous layer having a depth of at least about 0.1 mm, 0.2 mm, 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.7 mm, 1.8 mm, 1.9 mm. 2.0 mm, 2.1 mm, 2.2 mm, 2.3 mm, 2.4 mm, 2.5 mm, 2.6 mm, 2.7 mm, 2.8 mm, 2.9 mm, 3.0 mm, 3.1 mm, 3.2 mm, 3.3 mm, 3.4 mm, 3.5 mm, 3.6 mm, 3.7 mm, 3.8 mm, 3.9 mm, 4.0 mm, 4.1 mm, 4.2 mm, 4.3 mm, 4.4 mm, 4.5 mm, 4.6 mm, 4.7 mm, 4.8 mm, 4.9 mm, 5.0 mm, 5.5 mm, 6.0 mm, 6.5 mm, 7.0 mm, 7.5 mm, 8.0 mm, 8.5 mm, 9.0 mm, 9.5 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, 30 mm. Preferably, the substantially continuous layer has a depth of at least about 0.05 mm. At this depth, a layer deposited by SPD may be capable of achieving one of the aims of (i) preventing or inhibiting the initiation of a structural weakness and (ii) preventing the ingress of an environmental element. For typical applications in aircraft, the substantially continuous layer has a depth of from about 0.2 mm to about 4 mm. Depths of at least about 0.2 mm have greater utility in structural aspects of the invention.

In some embodiments, the method is adapted to deposit a substantially continuous layer having a depth of at most about 0.1 mm, 0.2 mm, 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.7 mm, 1.8 mm, 1.9 mm. 2.0 mm, 2.1 mm, 2.2 mm, 2.3 mm, 2.4 mm, 2.5 mm, 2.6 mm, 2.7 mm, 2.8 mm, 2.9 mm, 3.0 mm, 3.1 mm, 3.2 mm, 3.3 mm, 3.4 mm, 3.5 mm, 3.6 mm, 3.7 mm, 3.8 mm, 3.9 mm, 4.0 mm, 4.1 mm, 4.2 mm, 4.3 mm, 4.4 mm, 4.5 mm, 4.6 mm, 4.7 mm, 4.8 mm, 4.9 mm, 5.0 mm, 5.5 mm, 6.0 mm, 6.5 mm, 7.0 mm, 7.5 mm, 8.0 mm, 8.5 mm, 9.0 mm, 9.5 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, or 30 mm.

It will be understood that depth of the layer may be adjusted by building up layers of particles in the course of the method. In some embodiments, the substantially continuous layer has substantially even depth across the application surface.

In one embodiment of the method, the aircraft structure comprises a single part. The component may be any part of an aircraft for which structural integrity is important, such as a fuselage component. In a preferred embodiment of the method the component is a sheet metal forming the "skin" of the fuselage; an engine cowling, or a flight control such as a wing (including a flap, aileron, spoiler or winglet), tail (including a rudder, elevator or stabilizer), Sheet metal components are thin, relatively flexible and are particularly prone to fatigue and cracking. The cold spray application of aluminium particles to the sheet metal can increase the life of the part, and also repair any structural weakness before it leads to a catastrophic structural failure.

In one embodiment, the aircraft structure has two or more components. The present methods have been found to be particularly advantageous for the treatment of lap joints, and particularly riveted lap joints. Typically, such joints comprise an upper skin which overlaps an inner skin, with the overlapping area being secured by rows of fasteners, such as rivets. Often, three rows of rivets are provided across the overlapping area.

In one embodiment the aircraft structure is a joint. The joint may comprises one or more fastener holes, such as those found in a lap joint. In that case, the method comprises the step of bonding a plurality of particles on, over or about the one or more fastener holes, the bonding being effected under conditions allowing the plurality of particles to form a substantially continuous layer. In some embodiments, the fastener holes include a fastener. In that case the method comprises the step of bonding a plurality of particles on, over or about the one or more fasteners, the bonding being effected under conditions allowing the plurality of particles to form a substantially continuous layer. The Patent Proprietor proposes that for structural joints (such as lap joints) and also riveted repairs, environmental elements are capable of entering the skin splice or joint during service. This leads to degradative effects between the two mating surfaces and also around fasteners. In the case of fuselage lap joints the load in the upper skin is transmitted to the lower skin through the rivets. These rivets have countersunk heads resulting in what is termed "knife edges" in the upper skin. The aggressive environment coupled with the high stresses at these knife edges results in crack initiation. It is this crack initiation (which is exacerbated by environmental degradation) that results in crack growth at the fuselage joint. The Patent Proprietor further proposes that by both sealing the fasteners and reducing stresses in the upper skin, the problem of corrosion initiated cracking at fuselage joints is ameliorated or overcome. In addition the life of the joints is also increased. This may be achieved by the supersonic particle deposition (SPD) of a substantially continuous layer over the riveted region lap joint, riveted repairs, and other structural joints in thin skinned aircraft structure.

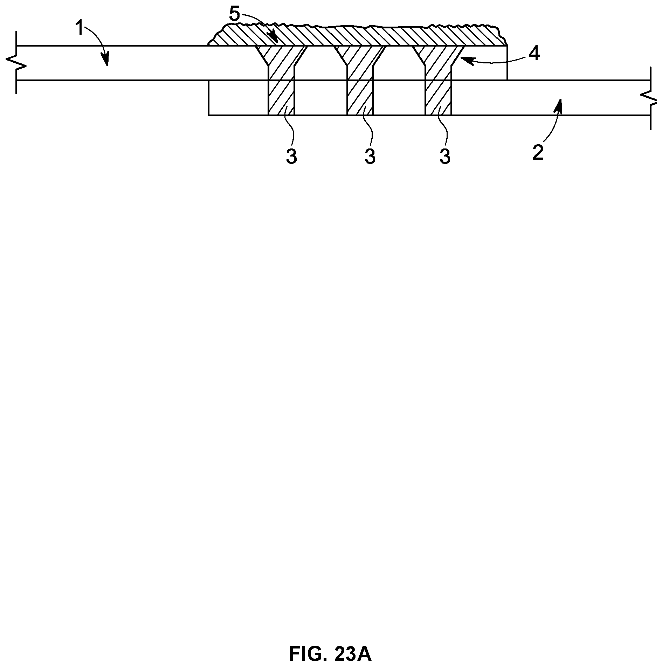

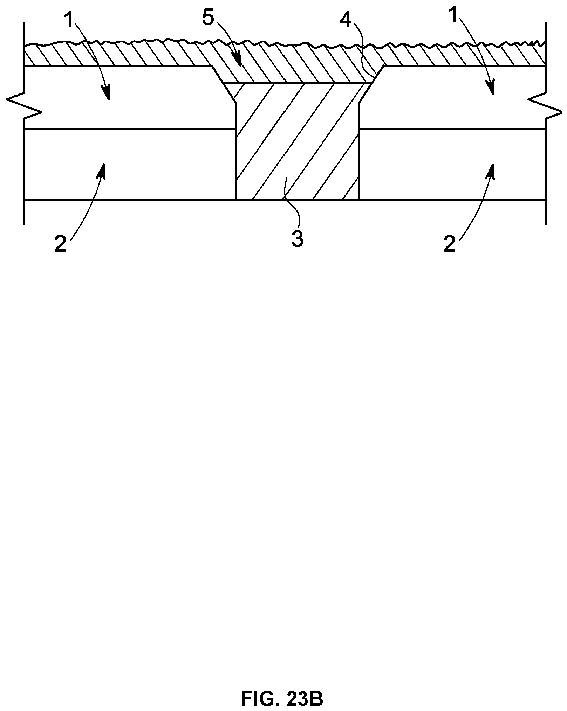

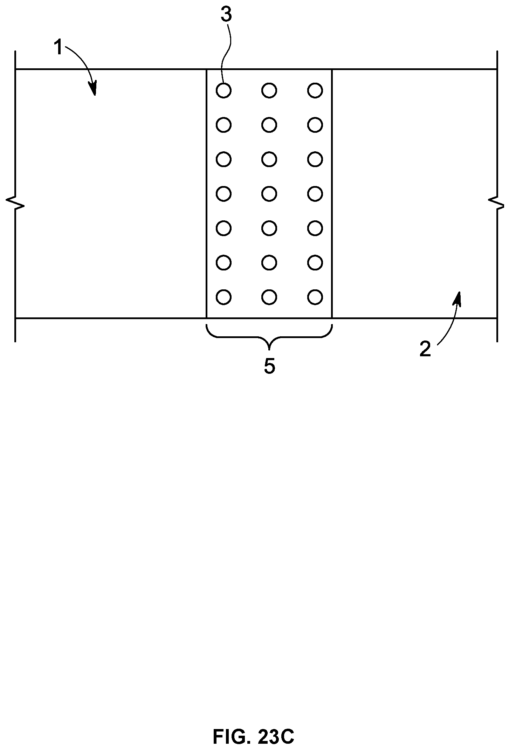

Turning now to Fig 23 there is shown diagrammatically and in cross-section a lap joint comprised of an upper sheet metal component **1,** a lower sheet metal component **2,** a rivet hole **4** passing through components **1** and **2,** with a rivet **3.** An SPD layer **5** has been applied such that the metal particles are bonded to the sheet metal component **1,** the rivet **3,** and an upper region of the rivet hole **4.** It will be noted that edges of the layer **5** are bevelled, and that the layer **5** does not extend to cover the junction between the free end of sheet metal component **1** and the underlying second sheet metal component **2.**

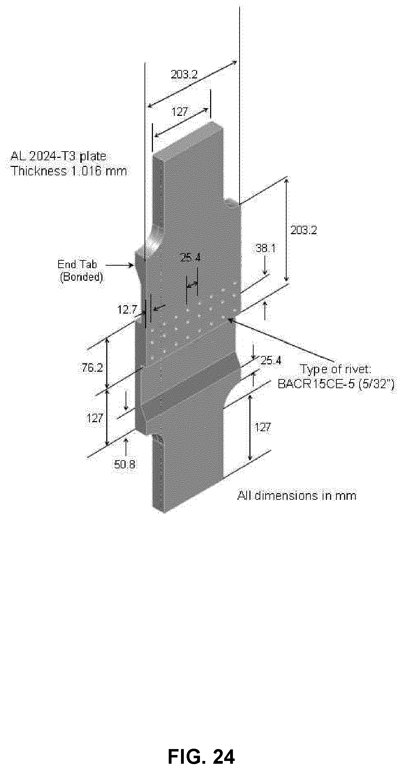

Fig 24 shows an enlarged view of the lap joint of Fig 23, better showing the countersinking of the rivet **3** within the joint.

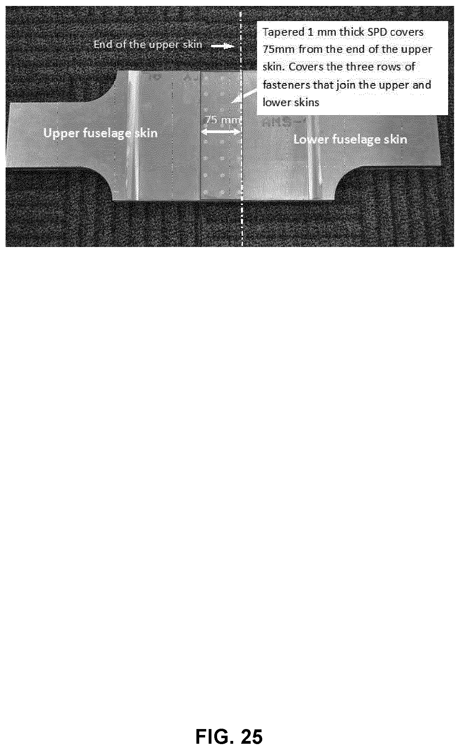

A plan view of the lap joint is shown in Fig 25 showing the three rows of rivets. The overlying SPD layer covers the area defined by **5.**

In one embodiment of the invention the structural weakness is a crack. Preferably the crack is initiated at the periphery of an aperture in the aircraft structure. Preferably the aperture is a fastener hole. Preferably the fastener hold is a fastener hole adapted to receive a fastener having a countersunk head. In one embodiment the crack is one formed by a force exerted by the fastener against an edge of a fastener hole. The initiation of the crack may be due to normal fatigue, and may aggravated by the presence of damage as a result of environmental ingress to the location. In another aspect the present invention provides an aircraft structure comprising a substantially continuous metallic layer, the layer being deposited on a surface of the structure, the layer being capable of (i) preventing or inhibiting the initiation of a structural weakness in the aircraft structure, and/or (ii) preventing the ingress of an environmental element, wherein the layer comprises a plurality of particles.

In some embodiments of the structure, the layer is capable (in addition to the capabilities recited *supra*) of preventing or inhibiting the ingress of an environmental element. Embodiments having said capabilities are particularly advantageous with regards to the operable life of an aircraft structure. Accordingly, a preferred form of the method provides that the layer is capable of preventing or inhibiting the initiation of a structural weakness, and/or preventing the ingress of an environmental element into an aircraft structural joint or riveted repair. In some embodiments, the substantially continuous layer has a depth of at least about 0.1 mm, 0.2 mm, 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.7 mm, 1.8 mm, 1.9 mm. 2.0 mm, 2.1 mm, 2.2 mm, 2.3 mm, 2.4 mm, 2.5 mm, 2.6 mm, 2.7 mm, 2.8 mm, 2.9 mm, 3.0 mm, 3.1 mm, 3.2 mm, 3.3 mm, 3.4 mm, 3.5 mm, 3.6 mm, 3.7 mm, 3.8 mm, 3.9 mm, 4.0 mm, 4.1 mm, 4.2 mm, 4.3 mm, 4.4 mm, 4.5 mm, 4.6 mm, 4.7 mm, 4.8 mm, 4.9 mm, 5.0 mm, 5.5 mm, 6.0 mm, 6.5 mm, 7.0 mm, 7.5 mm, 8.0 mm, 8.5 mm, 9.0 mm, 9.5 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, or 30 mm.

In some embodiments, the substantially continuous layer has a depth of at most about 0.1 mm, 0.2 mm, 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.7 mm, 1.8 mm, 1.9 mm. 2.0 mm, 2.1 mm, 2.2 mm, 2.3 mm, 2.4 mm, 2.5 mm, 2.6 mm, 2.7 mm, 2.8 mm, 2.9 mm, 3.0 mm, 3.1 mm, 3.2 mm, 3.3 mm, 3.4 mm, 3.5 mm, 3.6 mm, 3.7 mm, 3.8 mm, 3.9 mm, 4.0 mm, 4.1 mm, 4.2 mm, 4.3 mm, 4.4 mm, 4.5 mm, 4.6 mm, 4.7 mm, 4.8 mm, 4.9 mm, 5.0 mm, 5.5 mm, 6.0 mm, 6.5 mm, 7.0 mm, 7.5 mm, 8.0 mm, 8.5 mm, 9.0 mm, 9.5 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, or 30 mm.

In some embodiments, the substantially continuous layer has substantially even depth across the application surface.

In one embodiment, the aircraft structure is a single component, such as a sheet metal. In one embodiment, the aircraft structure has two or more components, such as a lap joint.

In one embodiment, the substantially continuous layer is formed by a method as described herein.

In one embodiment, the aircraft structure is a joint comprising a first component, and a second component, the first and second components each having an aperture, the first and second components jointed by a fastener extending through the apertures, a substantially continuous layer over or about at least one of the apertures.

Preferably, the substantially continuous layer does not extend to cover a junction between the free end of a first sheet metal component of the lap joint and the face of a second sheet metal component of the joint. This form of the joint is preferred because the SPD doubler does not transfer any load between the upper and lower skin. If the joint were modified in this way, a substantial amount of validation work would be necessary to fully characterise the structural properties of the modified joint.

The present invention will now be more fully described by reference to the following non-limiting examples.

**EXAMPLE 1: Effect of SPD on the fatigue performance of cracked metallic structures.**

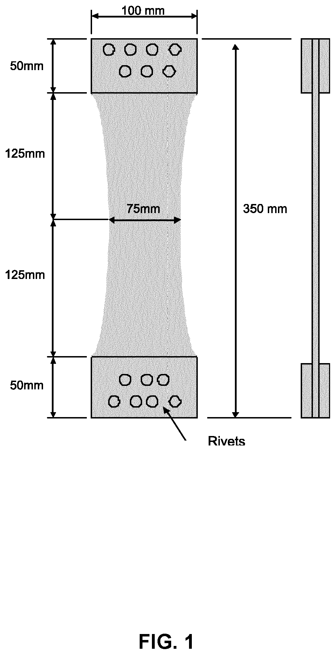

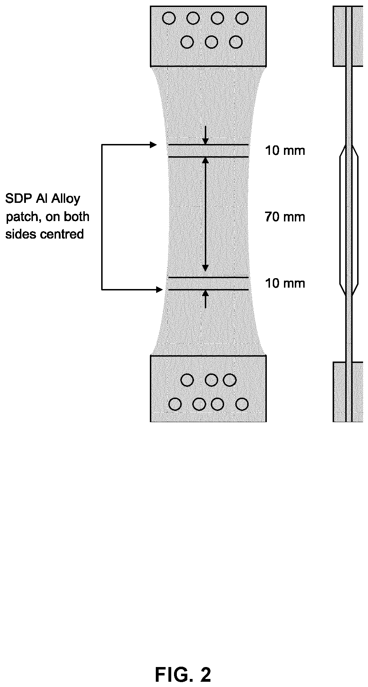

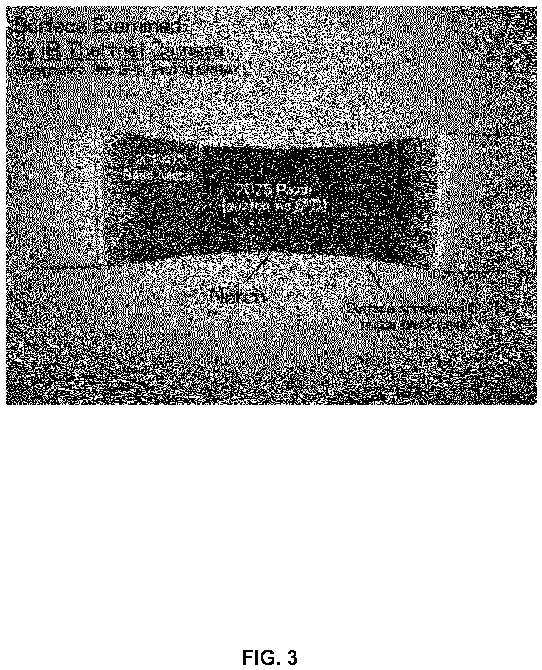

To study the effect of a supersonic particle deposition (SPD) on the fatigue performance of cracked metallic structures initial tests were performed on a 350 mm long and 1.27 mm thick 2024-T3 clad aluminium alloy dogbone specimen which contained a centrally located 2 mm long edge notch, see Figs. 1-3. These initial tests were performed under constant amplitude loading with $\sigma_{max}$ = 181 MPa and R = $\sigma_{min}/\sigma_{max}$ = 0.1. (This stress level was chosen since it represents a realistically upper bound on stresses that can be expected in a thin wing skin.) Two specimens were tested, one without a deposited metallic layer (also known as a "SPD doubler"), and one with a 1 mm thick full width doubler, that extended over the working section of the specimen, deposited on either side of the specimen, see Figs. 2 and 3. The doublers were deposited using a 7075 Aluminium Alloy powder with a nominal particle size of between 30 and 40 $\mu$m. The following deposition parameters were utilized:

ELAPSED TIME BETWEEN SURFACE PREPARATION AND COATING: 15-20mins
MAIN GAS PRESSURE (Bar): 40 (4 MPa) P/F VESSEL PRESSURE (Bar): 38 (3.8 MPa) TEMPERATURE (°C): 400
P/F HOPPER HEATER: Active
MAIN GAS FLOW (m3/hr): 92-100
P/F GAS QUANTITY (m3/h): 6.5
POWDER FEED RATE (RPM): 2.7rpm RELEASE TEMP(°C): 300
PREHEAT TEMP (°C): 350
INCREMENT (mm): -0.25mm
TRAVERSE RATE (mm/s): 250mm/s
STAND OFF (mm): 40mm (where possible)
NUMBER OF LAYERS: 12 - 16 Passes per Patch
DEPOSITION THICKNESS: 0.005 - 0.012" (approx. 0.127 - 0.305 mm POST TREATMENT: None For the baseline specimen test the crack length was monitored using digital cameras. However, whilst there are numerous non-destructive inspection tools that are commonly used to monitor crack growth in aircraft structures, i.e. ultrasonics, eddy currents, thermography, etc., the present study used Lock-in infra-red thermography to simultaneously monitor the evolution of the stress and the damage states in the 2024-T3 skin and the SPD doublers. (At this point it should be noted that to ensure a uniform emissivity the surface being monitored was sprayed matt black and that thermography was used as a qualitative rather a quantitative measure of the stresses and the fatigue damage.

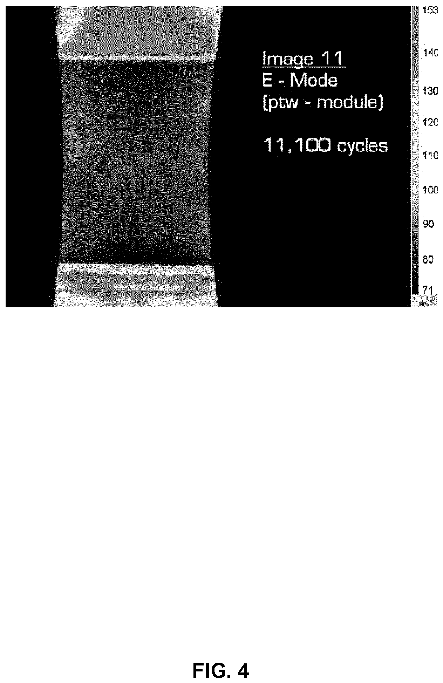

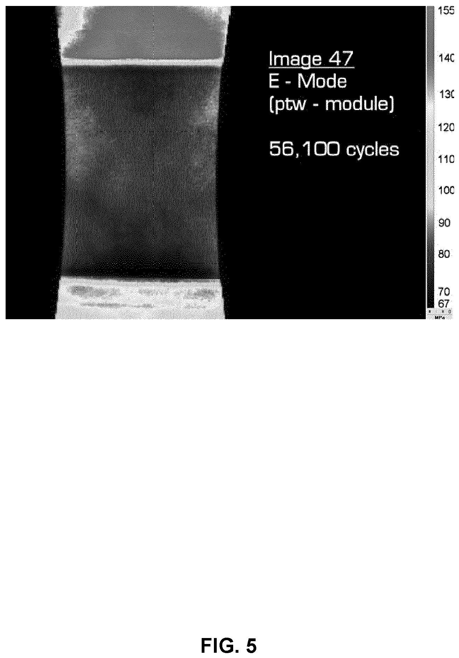

Details on the use of lock-in thermography to measure surface stresses and energy dissipation are given in [13-15].) The baseline specimen, i.e. without a doubler, lasted approximately 35,000 cycles. In contrast the 7075 SPD patched panel test was stopped after approximately 60,000 cycles with little, i.e. no evident, damage in the 7075 SPD or crack growth in the 2024-T3 skin. Figs. 4 and 5 present infrared pictures of the stress field at 11,100 and 56,100 cycles respectively. These figures show that the stresses in the SPD doubler remained essentially unchanged throughout the test.

**EXAMPLE 2: Single edge notch tension (SENT) SPD strip tests.**

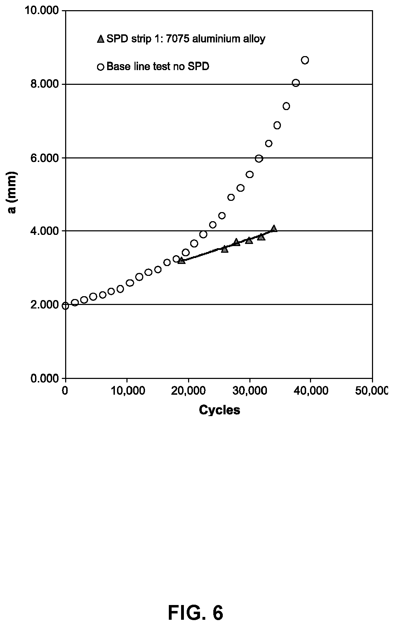

To further study the ability of SPD doublers to reduce crack growth tests were performed on a single edge notch dogbone specimen, with a geometry as described above and an (initial) 1.4 mm long edge notch. In the initial base line test there was no SPD and the specimen was tested under constant amplitude loading with a peak stress in the working section of $\sigma_{max}$ = 93.36 MPa and R ($\sigma_{min}/\sigma_{max}$) = 0.1. This stress level was chosen to represent a typical fuselage skin stress. Crack growth in the 2024-T3 plate was monitored using digital cameras and the resultant crack length versus cycles history is shown in Fig. 6.

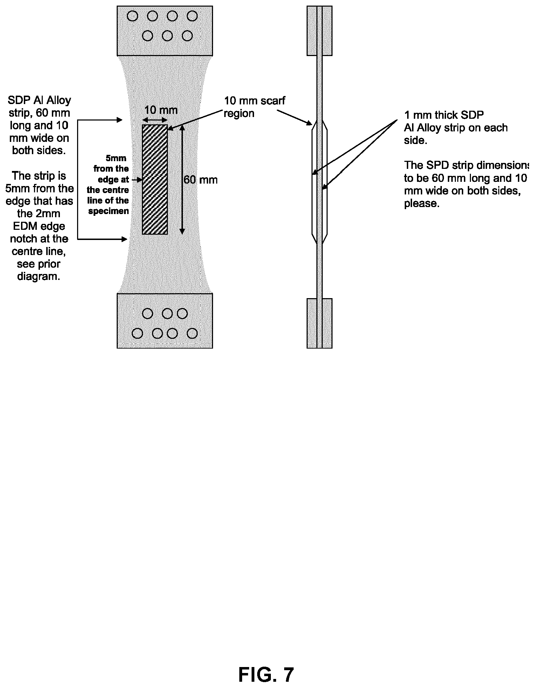

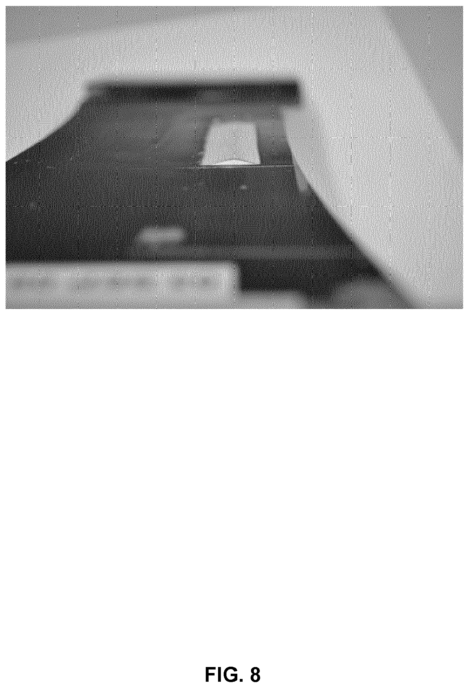

In the next test, the specimen was first loaded so as to grow a sharp crack. This first phase of the test was stopped at 18,886 cycles when the crack length was approximately 3.2 mm. A 10 mm wide and 1 mm thick SPD strip with a nominally (isosceles) triangular crossection, see Figs. 7 and 8, was then installed and the test was continued. The Crack growth in the 2024-T3 plate was again monitored using digital cameras whilst the stress field in both the SPD strip and the 2024-T3 skin and the degradation in the SPD strip was monitored using Lock-in infrared thermography.

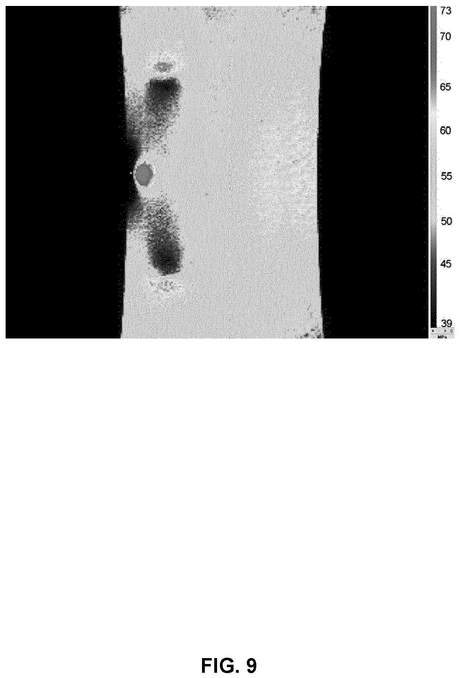

An infrared stress image captured shortly after the restart of the test is shown in Fig. 9. In this figure the picture was captured at a cyclic stress amplitude $\Delta\sigma$, remote from the centre line of the specimen, of approximately 53 MPa. This was done so as to not overly influence crack growth in the skin. Here it can be seen how the stress field in the SPD ahead of the crack is contiguous with that in the plate, i.e. the SPD is taking load in the region ahead of the crack.

Hot spots were also noted in the skin outboard of the ends of the SPD strip which establish that the SPD strip was indeed pulling load from the skin. This is essential if the process is to enhance the damage tolerance of the skin. The resultant crack growth data is shown in Fig. 6 where it is seen that the use of a 7075 aluminium alloy SPD strip has significantly reduced the crack growth rate.

A second test was then performed whereby the SPD strip was applied to a 0.3 mm long initial edm (electrical discharge machine) crack (notch) where the crack was not sharpened (grown) prior to installation of the SPD strip. In this case the test was stopped after approximately 345,000 cycles since there was no apparent crack growth at the notch (crack) or damage in the SPD.

**EXAMPLE 3: Cracking in 7050-T7451 SENT tests.**

It is well known that for combat aircraft most of the fatigue life of the structure is consumed in the growth of short cracks [16]. Consequently to evaluate the effect of a SPD repair on small flaws in aircraft structural components a 3 mm thick SENT (single edge notch tension) dogbone specimen, was tested with a $K_t$ = 1.11, with a thin 0.5 mm thick 7075 aluminium alloy SPD patch on one side. The 7050-T7451 specimen was 350 mm long, 42 mm wide and 3 mm thick and had a 0.69 mm radius semi-circular edge notch on one side. The specimen was tested at a peak stress, in the working section, of 140.0 MPa with R = 0.1. This corresponds to a peak (remote) load of 17.64 kN with R = 0.1 and was chosen to represent the stress, at limit load, in the wing skin of a typical fighter aircraft.

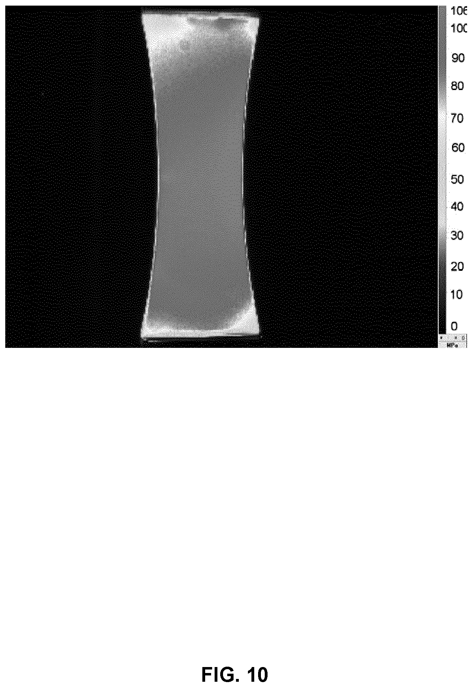

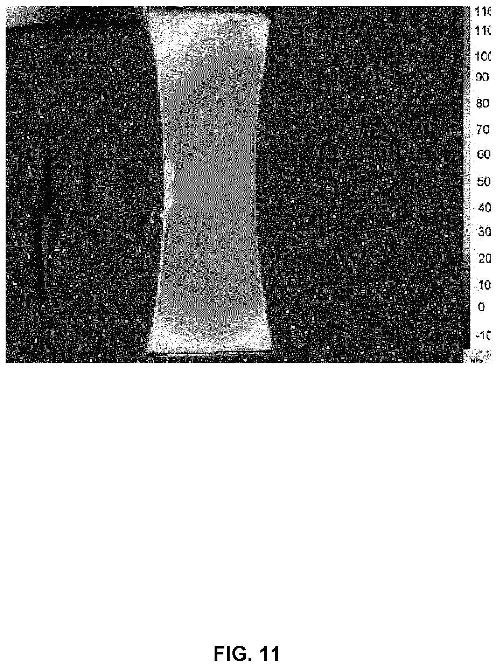

A thin SPD doubler was used so that, in this test program, the damage induced could be evaluated, as the crack opened and closed during fatigue loading, in the interfacial region between the SPD and the 7050-T7451. This damage could have been reduced by increasing the thickness of the SPD thereby lowering the stresses in the underlying 7050-T7451 and subsequently reducing the opening of the crack. The ability of the SPD doubler to pull load from the underlying 7050-T7451 structure is clear from the E-Mode (stress) Lock-in thermography picture of the stresses on the specimen side with the SPD patch at 3,000 cycles, see Fig. 10. Although the crack in the 7050-T7451 specimen was not immediately evident an analysis of the infra-red data associated with the left hand side of the specimen shown in this picture, i.e. in the SPD directly over the crack, revealed an indication of the crack under the patch. After 33,000 cycles the crack in the 7050-T7451 had grown to a length of approximately 4.2 mm and the resultant stress picture is shown in Fig. 11. At this point there is evidence of delamination damage (disbonding) on the LHS of the SPD in the region that lay over the crack.

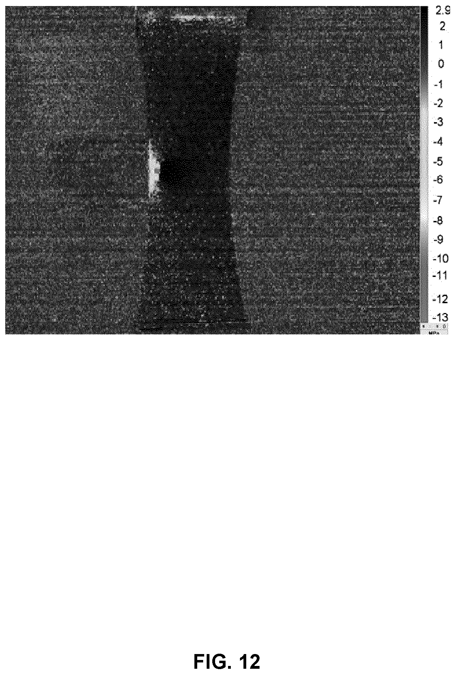

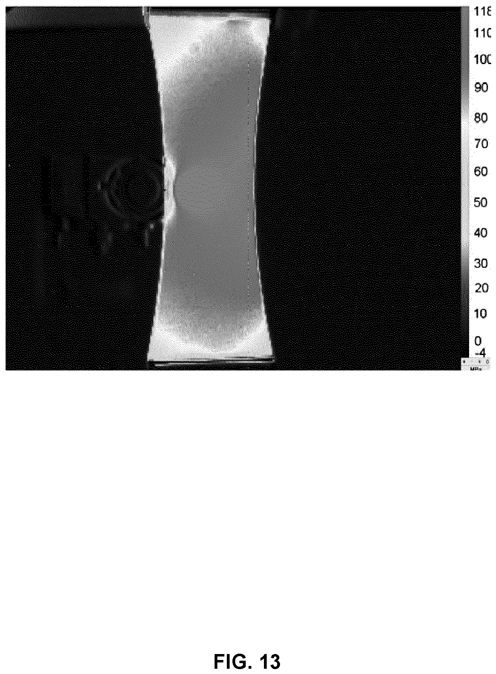

The extent of the damage is illustrated in Fig. 12 which presents a picture of the dissipated energy at 33,500 cycles. (Note that the dissipated energy associated with the crack tip is clearly evident in this figure. This is important because it raises the potential of non-destructive inspection of the specimen through the SPD doubler.) At 35,500 cycles the crack had grown to approximately 4.92 mm and the associated stress picture is shown in Fig. 13 where it can be seen that the delamination in the SPD has grown slightly.

It would thus appear that whilst damage to the SPD interface can result due to crack opening the onset of damage does not appear to lead to immediate (catastrophic) failure in the SPD. As such damage growth in the SPD can be included in the damage tolerance assessment of the SPD repair process. Furthermore, given that there was no apparent damage at the ends of the SPD the damage in the central region over the crack can be controlled by increasing the thickness of the SPD in this region thereby reducing the stress in the 7050-T7541 together with the associated crack opening displacement.

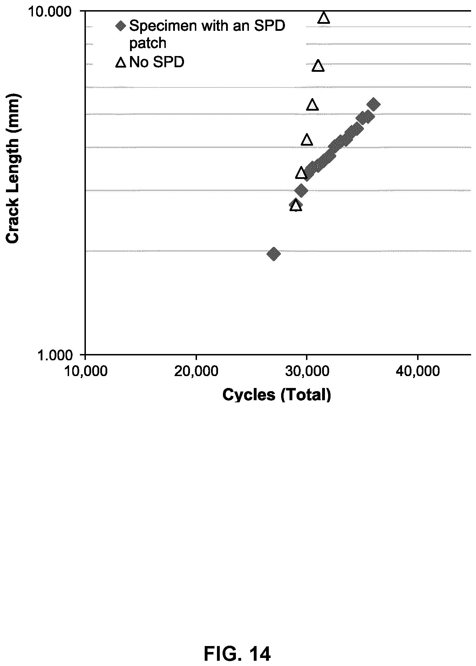

The test was stopped at 37,000 cycles at which stage the crack was approximately 5.3 mm long. A plot of the measured crack length versus cycles history is presented in Fig. 14 together with test data for the case when there was no SPD. Here it will be noted that the SPD patch has somewhat reduced the crack growth rate. To further confirm the ability of SPD to restore structural integrity and to illustrate the ability to control the onset of delamination damage over the crack a test was subsequently performed on a 1 mm thick 7050-T7451 SENT specimen, with a 0.8 mm long initial edge crack and an in-plane geometry as per the previous test. This specimen had two 0.5 mm thick SPD doublers on either side of the specimen. The specimen was subjected to a peak (remote) load of 5.88 kN with R = 0.1 which equates to the same remote stress as in the previous test. In this case the test was stopped after 117,000 cycles as there was no apparent crack growth and no apparent degradation in the SPD.

### EXAMPLE 4: Predicting crack growth in the 7050-t7451 sent test.

This example is directed to prediction of the crack length history seen in the 7050-T7451 SENT test outlined in Section 2.2. Here a 3 mm thick SENT (single edge notch tension) dogbone specimen with a thin 0.5 mm thick 7075 aluminium alloy SPD patch on one side was tested. The specimen was 350 mm long, 42 mm wide and 3 mm thick and had a 0.69 mm radius semi-circular edge notch on one side. The specimen was subjected to a peak (remote) load of 17.64 kN with R = 0.1.

The stress intensity factor for a through-the-thickness crack of length c emanating from the centre of the notch of radius r is given in [17] as:

$$K = f_1 g_4 f_w \sigma \sqrt{(\pi c)} \qquad (1)$$

Where c is the length of the crack emanating from the notch and $\sigma$ is the stress in the 7050-T7451 underneath the SPD. The values of $f_1$, $g_4$ and $f_w$ taken from [17] are:

$$f_1 = 1 + 0.358\varphi + 1.425\varphi^2 - 1.578\varphi^3 + 2.156\varphi^4 \qquad (2)$$

$$\varphi = 1/(1 + c/r) \qquad (3)$$

$$g_4 = K_t (0.36 - 0.32/\sqrt{(1 + c/r)} \qquad (4)$$

$$f_w = 1 + 2.7\varphi^2 - 3.5\varphi^4 + 3.8\varphi^6 \qquad (5)$$

$$K_t = 3.17 \qquad (6)$$

Since the specimen was tested using hydraulic grips the formulae used for fw was the fixed displacement expression given in [17]. Let us now attempt to use this solution to predict crack growth. Fig. 11-13 revealed that there was (delamination) damage growth in the SPD over the crack. Thus as recommended in [18] for composite repairs to cracked metal skins the problem was analysed by assuming that the resultant stress intensity factor was equal to the solution to the SENT specimen subjected to a stress field $\sigma$o which corresponds to the stress in the (base) specimen under the SPD in the absence of a crack. The DSTO Combat and Trainer Aircraft Group [19-21] have shown that the growth of small flaws in 7050-T7451 conforms to the Generalised Frost-Dugdale crack growth law, viz:

$$da/dN = C^* a^{(1-\gamma/2)} (\Delta K^{(1-p)} K_{max} p/\sigma_y)^\gamma /(1 - K_{max}/K_c) \qquad (7)$$

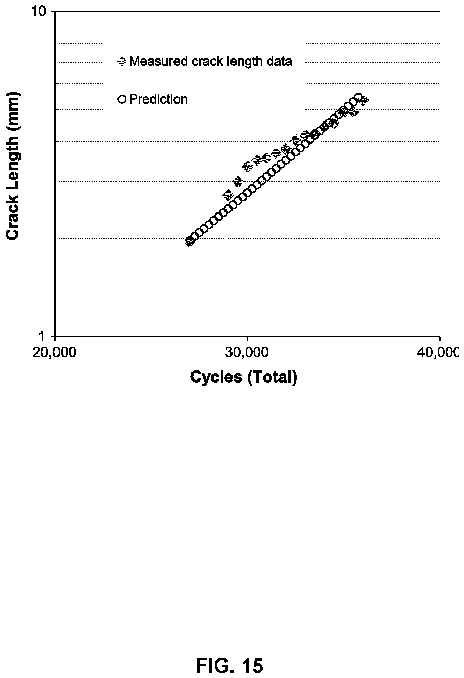

where $C^*$, $\gamma$ and $K_c$ are material constants and a, $K_{max}$ and $\Delta K$ are crack lengths, the maximum value of the stress intensity factor at cycle N and the range of the stress intensity factor at cycle N respectively. The crack length history was predicted by integrating Eq. (7) using Eqs. (1)-(8) with $P_{max}$ = 17.4 kN, R = 0.1 and r = 0.69 mm. In this calculation the values of $\gamma$, p, $C_*$, $\sigma_y$ to be as given in [19,21], viz: $\gamma$ = 3, p = 0.2, $C_*$= 0.50, $\sigma_y$ = 460 MPa and, for this thickness, $K_c$ ~50-65 MPa √m were taken. (In this analysis a value of $K_c$ = 60 MPa √m was used. However, for this range of loads and crack lengths the value has a small effect on the crack length predictions.) The resultant predicted crack length history is shown in Fig. 15 where a good agreement is seen between the measured and predicted crack length histories.

In this case, as for cracks growing under composite repairs [18] the stress intensity factor can be approximated as the solution to the SENT specimen subjected to the stress field $\sigma o$ which corresponds to the stress in the (base) specimen under the SPD in the absence of a crack. One advantage of this approach is that the computed crack length history should be conservative.

### EXAMPLE 5: Approximate solutions for centre cracked panels repaired using SPD.

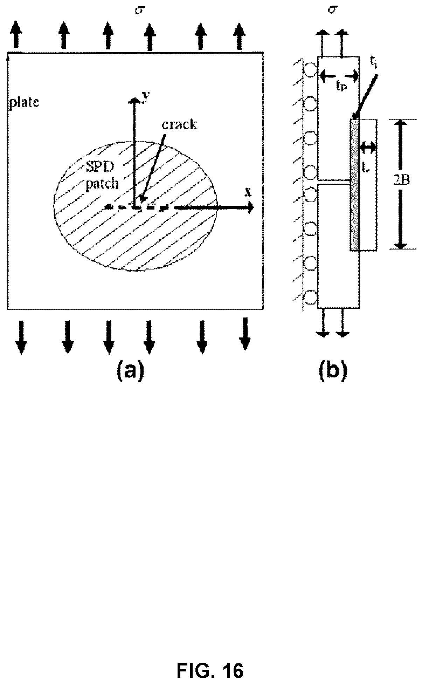

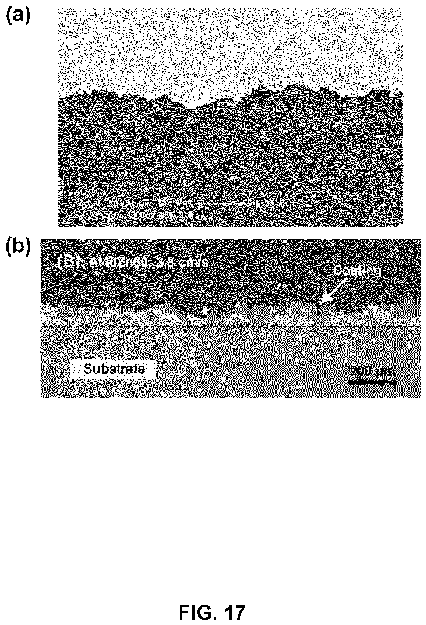

In the previous example the case of a thin (0.5 mm) SPD repair to a small flaw in a relatively thick (3 mm) section was considered, and SPD delaminated on either side of the crack was noted. In such cases it was reasonable to assume that the dominant effect of the SPD was to merely reduce the net section stress [18]. However, for certification purposes the solution needed for the stress intensity factor associated with an arbitrary length crack where SPD patch is not thin. It is also necessary to establish if, for a given crack length, the stress intensity factor range $\Delta K$ is beneath the threshold value $\Delta K_{th}$ as this will significantly simplify the certification process. To this end this example will consider an SPD repair of thickness $t_r$ to a centre cracked panel, thickness $t_p$, with an interfacial region, thickness $t_i$, that has been (potentially) affected by the SPD process subjected to a remote stress $\sigma$ as shown in Fig. 16. The SPD process can result in an interfacial region that has been affected by the SPD process [22-24]. For the aluminium alloy powders used in SPD repairs the maximum particle size is approximately 40 $\mu$m. Consequently the thickness ($t_i$) of this region is generally very small [22-24] in comparison to the thickness of the underlying plate, i.e. typically less than 0.1-0.15 mm, see Fig. 17. As a result this problem is analogous to that of a bonded repair where the interfacial region mimics the adhesive that joins the repair to the plate. It is known that for small cracks in metal skins repaired using a composite patch the 2D solution for the stress intensity factor is essentially due to the reduction in the stress field under the repair whilst for long cracks the stress intensity factor asymptotes to a limiting stress intensity factor $K_\infty$ as the crack length increases, see [18,25-28]. As such it follows that the 2D solution for the stress intensity factor associated with small cracks repaired using SPD is also essentially due to the reduction in the stress field under the SPD whilst for long cracks repaired using SPD the stress intensity factor should also asymptote to a limiting stress intensity factor $K_\infty$ as the crack length increases. The approximate formulae for this asymptote thus follows from [26], see pp. 216-218, viz:

$$K_\infty = Y\Omega_L\sigma_0\sqrt{\pi a} \qquad (8)$$

where

$$\sigma_0 = \sigma E_p t_p/(E_p t_p + E_r t_r) \qquad (9)$$

Y is a geometry factor, = 1 for a large centre cracked panel and $\Omega_L$ is a load attraction factor that accounts for the different stiffness of the repaired region. ($\Omega_L$ = 1.) The term $\pi\lambda$ is given by the expression

$$\pi\lambda = \sqrt{E_p t_p/\beta(1 + t_p E_p/E_r t_r)} \qquad (10)$$

where

$$\beta = (t_i/G_i + t_r/3G_r + t_p/3G_p)/(t_i/G_i + 3t_r/8G_r + 3t_p/8G_p)^2 \qquad (11)$$

Here $t_i$, $t_p$ and $t_r$ are the thickness' of the interface region where, the SPD has modified the properties of the plate, of the plate, and of the SPD respectively, G and E denote the shear and Young's modulus and the subscripts i, p and r denote their values for the interfacial bonding region, the plate, and the SPD repair respectively. (The notation used in this section follows that given in [26] pp. 217-218.) This expression, i.e. Eq. (11), is an extension of the formulae first developed in [25] in that it allows for the interfacial thickness $t_i$ to be negligible. This (allowance) is important since for SPD repairs the modulii of each region will generally be comparable and the interfacial thickness $t_i$ that is affected by the SPD process is expected to be very small. As such the terms in Eq. (11) related to the term $t_i/G_i$ are small in comparison with those terms relating to the SPD repair ($t_r/3G_r$) and the plate ($t_p/3G_p$). Consequently the expression for $\beta$ can often be approximated as:

$$\beta = (t_r/3G_r + t_p/3G_p)/(3t_r/8G_r + 3t_p/8G_p)^2 \qquad (12)$$

It is expected that, in many instances, the SPD powder, used in the repair, and the plate material will have essentially the same modulii, i.e. aluminium plates are expected to be repaired using aluminium alloy powders and steel components are likely to be repaired using steel powders. In such cases $G_r$ can be approximated by $G_p$ so that Eq. (12) reduces to:

$$\beta = 64G_p/27(t_r + t_p) \qquad (13)$$

Having established the asymptotic limit it follows from [28-30] that the functional form of K as a function of the crack length (a) can be approximated as:

$$K = W(a/\pi\lambda)\sigma_0\sqrt{(\pi a)} \qquad (14)$$

where the function $W$, viz:

$$W(a/(\pi\lambda)) = \sqrt{[(1 + 2.23a/(\pi\lambda))/(1 + 3a/(\pi\lambda) + 7(a/(\pi\lambda))^2)]} \qquad (15)$$

describes the transition from the small crack solution a→0 to the long crack solution a→∞1, see [28,30]. Eqs. (14) and (15) reveal that for short cracks the reduction in the stress intensity factor is essentially due to the reduction in the stress in the plate due to the SPD patch, i.e.

$$\lim_{a\to 0} K = \sigma_0\sqrt{\pi a} \qquad (16)$$

For long cracks K tends to its asymptotic limit $K_\infty$. In Eq. (14) the functional form associated with [30] has been used rather than that given in [28].

### EXAMPLE 6: SPD repairs to cracks in an arbitrary stress field

This example considers the case of an SPD repair to a crack with a total of length 2a subjected to an arbitrary stress field. In this instance the solution for the stress intensity factor K follows from the above analogy with a composite repair to a crack in a metal skin under an arbitrary symmetry stress field [29], viz:

$$K = W(a/\pi\lambda)\underline{K} \qquad (17)$$

where K is the solution to the entire cracked specimen subjected to a stress $\sigma_0$ which corresponds to the stress in the (base) specimen under the SPD in the absence of a crack is given by

$$\underline{K} = 2\sqrt{(a/\pi)} \int_0^a \sigma_y(x)/(a^2 - x^2)^{1/2}dx \qquad (18)$$

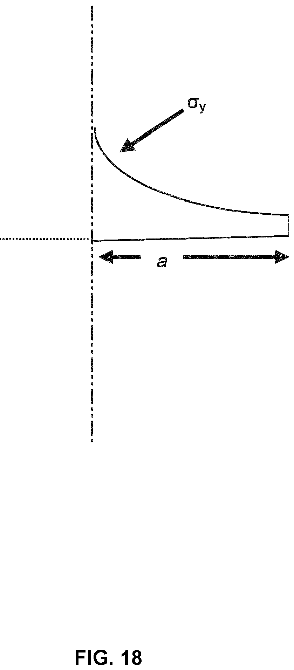

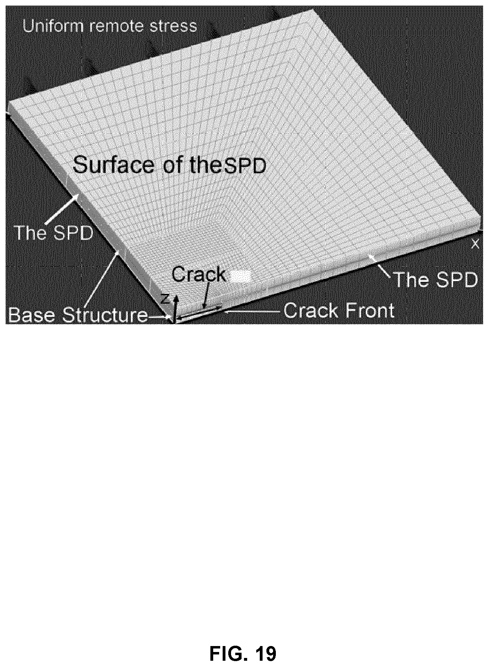

and $\sigma_y$ is the stress in the skin under the SPD in the absence of a crack, see Fig. 18.
To evaluate the accuracy of this approximation let us consider a 3 mm thick 200 mm 200 mm centre cracked plate repaired using a 3 mm (thick) 200 mm 200 mm SPD patch subjected to a remote uniform stress (in the skin) of 100 MPa. To this end three dimensional finite element models were constructed for: 2, 6, 10, 20, 30, and 40 mm long cracks. Due to symmetry considerations only one quarter of the structure needed to be modelled. In each case the models had approximately 66,000 three dimensional twenty-one nodded isoparametric brick elements and approximately 300,000 nodes, see Fig. 19. There were eight elements through the thickness of the SPD and eight elements through the thickness of the plate. In each case there were ten elements along the crack and the side length of the crack tip elements were approximately 1/100th of the length of the crack. The midside nodes associated with the near tip elements were moved to the quarter points so as to simulate the necessary $r^{-1/2}$ singularity. Bending of the SPD and the plate was prohibited. Both the aluminium alloy plate and the SPD were assumed to have a Young's modulus E = 70,000 MPa and a Poisson's ratio of 0.3. The computed values of the maximum value of the stress intensity factor $K_{max}$ are given in Table 1 below along with the associated analytical values, where Eq. (12) was used to compute β, and the quantity.

**Table 1**

Comparison between predicted and computed stress intensity factors.

| $a$ (mm) | Finite element $K_{max}$ (MPa $\sqrt{m}$) | Analytical $K_{max}$ (MPa $\sqrt{m}$) | Upper bound $K_u$ (MPa $\sqrt{m}$) |
|---|---|---|---|
| 1 | 4.88 | 5.03 | 5.60 |
| 3 | 6.77 | 6.82 | 9.71 |
| 5 | 7.29 | 7.29 | 12.53 |
| 10 | 7.56 | 7.59 | 17.72 |
| 15 | 7.60 | 7.65 | 21.71 |
| 20 | 7.60 | 7.68 | 25.07 |

$$K_u = \sigma_o \sqrt{(\pi a)} \qquad\qquad (19)$$

which represents an upper bound on K. Here it can be seen that the stress intensity factor associated with SPD repairs does indeed asymptote to a constant value and that this asymptote is in good agreement with the analytical approximation, i.e. Eq. (14).

## EXAMPLE 7: Quality control assessment tool.

When performing composite repairs to aircraft structural members it is common practice to make travelling specimens that are subsequently used to assess the quality of the repair [11,12]. The challenge is to develop a similar approach for SPD modifications/repairs to aircraft structural components. As such this section raises the possibility of using simple specimens that are subsequently fatigue tested and the quality of the bond assessed via the fractal dimension [31] of the resultant fatigue surfaces. In this context it should be noted that is now known that fracture surfaces can be considered as a fractal set, see Mandelbrot et al. [31]. In this work Mandelbrot et al. [31] wrote: "When a piece of metal is fractured either by tensile or impact loading the facture surface that is formed is rough and irregular. Its shape is affected by the metal's microstructure (such as grains, inclusions, and precipitates where characteristic length is large relative to the atomic scale), as well as by 'macrostructural' influences (such as the size, the shape of the specimen, and the notch from which the fracture begins). However, repeated observation at various magnifications also reveal a variety of additional structures that fall between 'micro' and 'macro' and have not yet been described satisfactorily in a systematic manner. The experiments reported here reveal the existence of broad and clearly distinct zone of intermediate scales in which the fracture is modelled very well by a fractal surface." It is also known [32-34] that, prior to the onset of rapid fracture, fatigue crack surfaces in metals, that are not associated with very small crack lengths, have a fractal box dimension D, as defined in [32], that lies between approximately 1.2 and 1. Thus it may be possible to use this observation to quantify the quality of the SPD process. To do this travelling specimens would be fabricated in parallel with the SPD application. These travelling specimens would subsequently be fatigue tested and the associated fractal box dimensions measured. It is hypothesised that if D had a value that was near 1.2, or lower, then you would have a process that produced a fatigue crack surface that was consistent with that associated with fatigue crack growth in the base material, and the process would be acceptable. If it was significantly greater then it is hypothesised that the application process may be deficient.

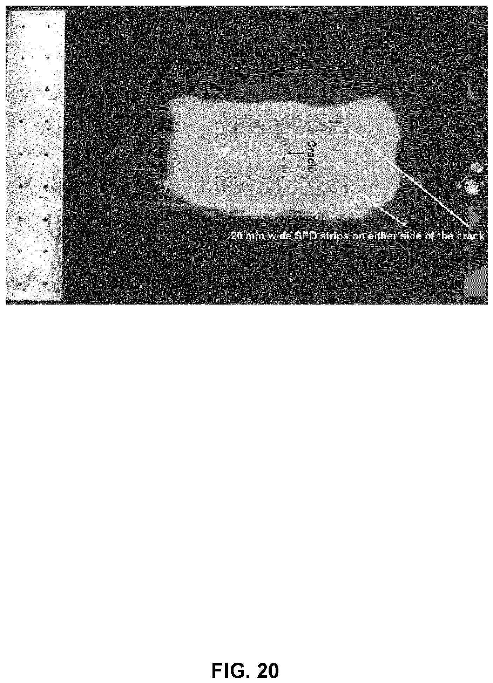

To evaluate this concept the fractal box dimension was measured, the fractal box associated with SPD doublers used on a rib stiffened panel deposited using powders where there was (subsequently) found to be a quality control issue with the powder, i.e. it was found to contain a large proportion of sub 10 micron particles. In this instance the panels had two ten mm wide and 200 mm long SPD doublers located on either side of a centrally located 20 mm long crack, see Fig. 20.

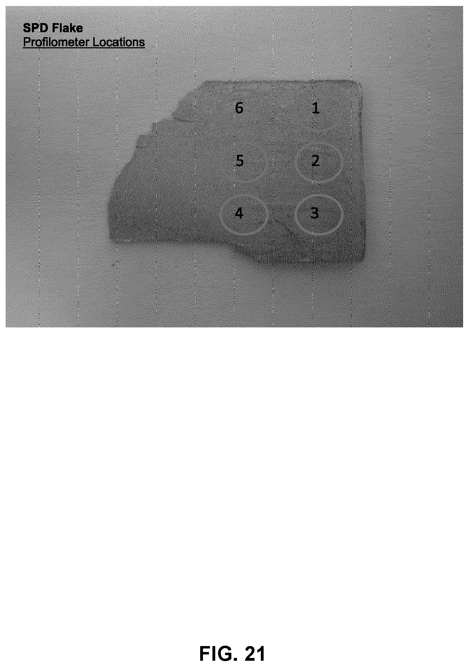

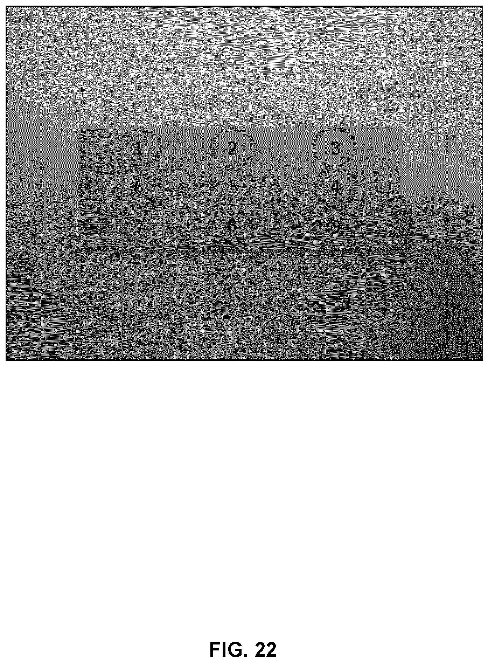

As a result of the poor quality powder one end of each of the two SPD strips delaminated with the locus of the delaminations lying entirely within the SPD, see Figs. 21 and 22. The fractal box dimensions associated with delamination surfaces on each of the two SPD strips, referred to in Figs. 21 and 22 as strips A and B, that delaminated from the structure were measured and the resultant values are given in Tables 2 and 3, below.

**Table 2**

Fractal box dimension (D) associated with the end of strip A.

|  | Random area 1 within location | Random area 2 within location |
|---|---|---|
| Loc 1 | 1.629 | 1.500 |
| Loc 2 | 1.409 | 1.675 |
| Loc 3 | 1.542 | 1.684 |
| Loc 4 | 1.416 | 1.473 |
| Loc 5 | 1.543 | 1.530 |
| Loc 6 | 1.399 | 1.529 |
| Average | 1.49 | 1.57 |

Table 3

Fractal box dimension (D) associated with the end of strip B.

|  | Random area 1 within location | Random area 2 within location |
|---|---|---|
| Loc 1 | 1.673 | 1.613 |
| Loc 2 | 1.482 | 1.521 |
| Loc 3 | 1.525 | 1.614 |
| Loc 4 | 1.551 | 1.49 |
| Loc 5 | 1.526 | 1.516 |
| Loc 6 | 1.558 | 1.561 |
| Loc 7 | 1.578 | 1.482 |
| Loc 8 | 1.503 | 1.593 |
| Loc 9 | 1.584 | 1.563 |
| Average | 1.553 | 1.550 |

Here it will be noted that in each case the fractal box dimension D was essentially constant at each of the locations measured on each of the two delaminated strips. Furthermore, the value of the fractal box dimension D was approximately 1.5, see Tables 2 and 3. As such the fractal box dimension D associated with these two poor quality SPD's differed significantly from that associated with macro-scopic fatigue crack growth in metals. Thus whilst a great deal more work is needed to validate the hypothesis that D can be used to quantify the quality of the SPD it looks to be worthy of further evaluation. It is interesting to note that prior to these tests a value of D = 1.5 had only (previously) been found for very small fatigue cracks [32,34]. A more detailed discussion of the role of the fractal dimension D in describing the nature of the crack tip singularity and in characterising fatigue crack growth is given in [20,34-37].

**EXAMPLE 8: Application of SPD to an aircraft lap joint.**

Specimens have been prepared to evaluate the application of the SPD on a representative aircraft lap.
The specimen geometry was developed as part of the FAA Aging Aircraft Program, where it was shown to reproduce the crack length history seen in Boeing 727 and 737 fleet data. The basic specimen used consists of two 2024-T3 clad aluminium alloy sheets 1.016 mm (0.04 inch) thick, fastened with three rows of BACR15CE-5, 1000 shear head counter-sunk rivets, 3.968 mm (5/32 inch) diameter (Fig 24). The width of the specimen was chosen to coincide with the typical distance between tear straps of a B-737 aircraft. Since the amount of out-of-plane bending in a typical fuselage joint is an important factor in the fatigue performance of the joint, the amount of local bending in the specimen was made similar to that seen in a typical fuselage joint by testing the specimens bonded back-to-back and separated by a 25 mm thick honeycomb core. This test configuration was crucial in ensuring that the specimens reproduced fleet behaviour, see [40, 41]. As in [40, 41] the upper row of rivet holes contained crack initiation sites, induced prior to assembly of the joint by means of an electrical spark erosion technique, on either side of the rivet holes. These initial cracks were (each) nominally 1.25 mm long. This crack length was chosen so that the (initial) defect was obscured by the fastener head and as such was representative of largest possible undetectable flaw size.

A 1 mm thick 7075 SPD doubler was deposited over the three rows of fasteners, (Fig 25). The Powder was deposited utilising the Kinetics 4000 Series CGT equipment with the Type 33 polycarbonate nozzle. The surface was precleaned utilising 120 Aluminium Oxide grit at 60 psi (approx. 413.7 kPa). The deposition parameters were as follows:

ELAPSED TIME BETWEEN SURFACE PREP AND COATING: 15-20mins
MAIN GAS PRESSURE (Bar): 40 (4 MPa)
P/F VESSEL PRESSURE (Bar): 38 (3.8 MPa)
TEMPERATURE (°C): 400
P/F HOPPER HEATER: Active
MAIN GAS FLOW (m3/hr): 92-100 P/F GAS QUANTITY (m3/h): 6.5
POWDER FEED RATE (RPM): 2.7rpm
RELEASE TEMP(°C): 300
PREHEAT TEMP (°C): 350
INCREMENT (mm): -0.25mm
TRAVERSE RATE (mm/s): 250mm/s
STAND OFF (mm): 40mm (where possible)
NUMBER OF LAYERS: 12 - 16 Passes per Patch
DEPOSITION THICKNESS: 0.005 - 0.012" (approx. 0.127 to 0.305 mm)
POST TREATMENT: None

### EXAMPLE 9: Testing of SPD applied to aircraft lap joint

The specimens were tested under constant amplitude loading, with the maximum and minimum loads as detailed below.

| | |
|---|---|
| P Max (kN): | 40 |
| PMin (kN) | 2 |
| P Mean (kN) | 21 |
| Test Frequency (hZ) | 5 |

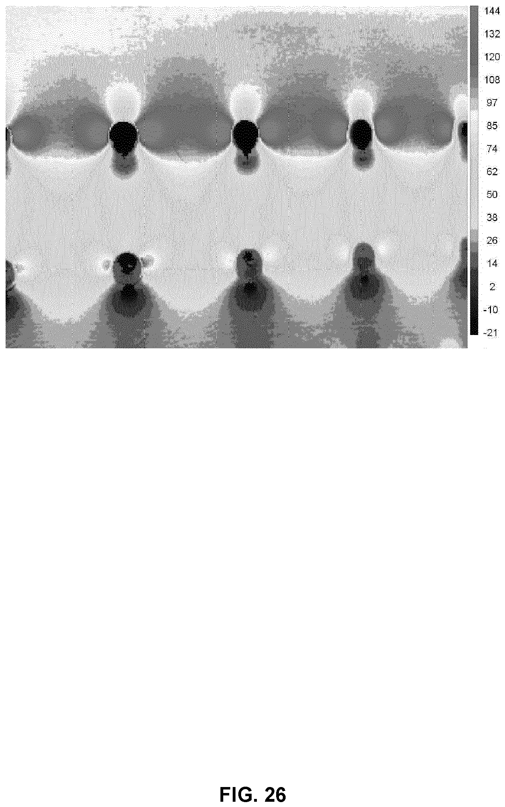

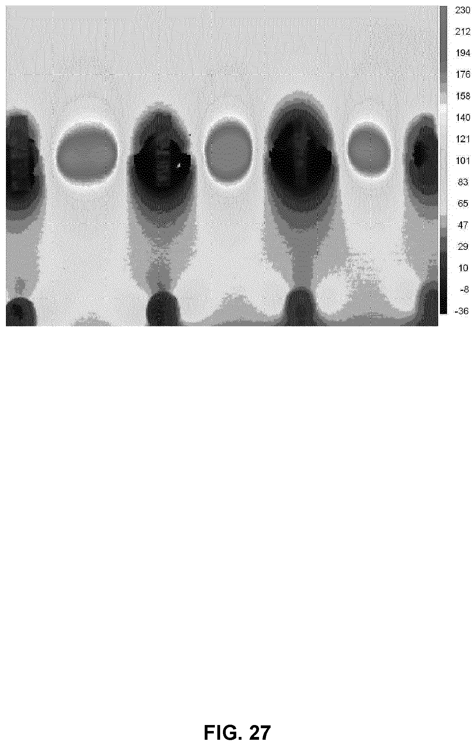

These loads were determined from operational data obtained for the US DoT (Department of Transportation) MSD Committee Review Board for the B-737 aircraft, see [40] for more details, and a stress picture showing the stresses in the baseline specimens is presented in Figure 26 and a stress picture just prior to link up of msd is shown in Figure 27. The fatigue performance of the baseline (no SPD) specimens is documented in [42].

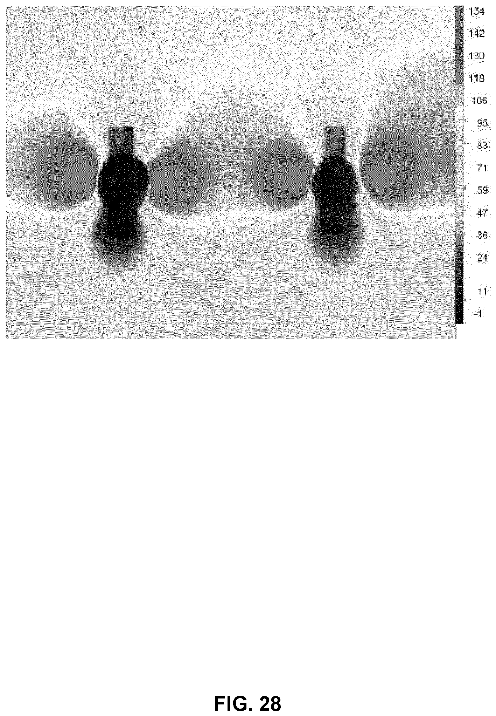

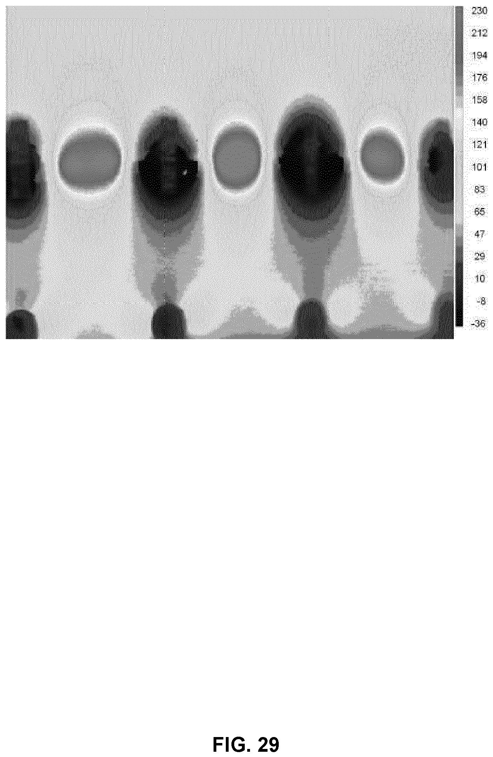

Here it was found that for specimens without an SPD modification the number of cycles to first link up of cracks from adjacent holes occurs at approximately 30,000 cycles. To illustrate this and to show the stresses in the baseline joint Figures 28 and 29 present the stresses in a (baseline) joint at approximately 6,500 and 29,000 cycles respectively.

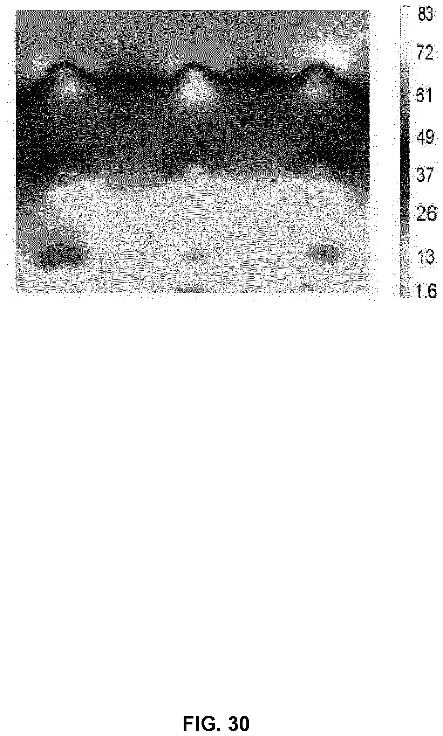

For Test Panel 1 the test program revealed that after approximately 110,000 cycles the SPD doubler was still intact. Furthermore, there was no apparent crack growth at any of the fasteners in the lap joint, cracking in the SPD or damage to the bond between the SPD and the skin/fasteners. This is evident from Figure 30 where we show a close up view of the stresses in three rows of rivets at 92,000 cycles.

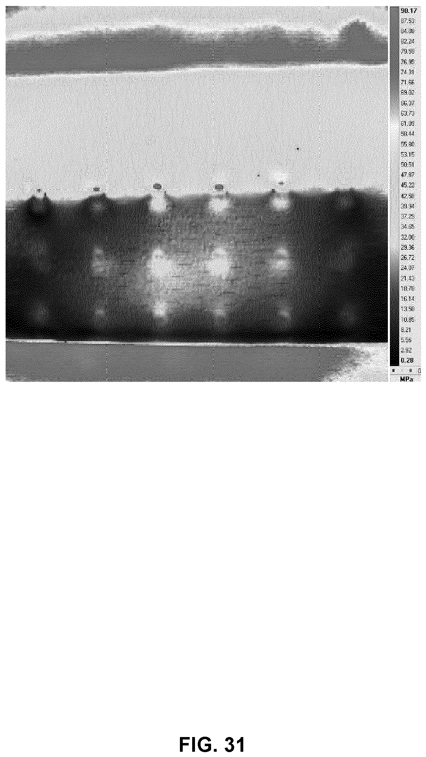

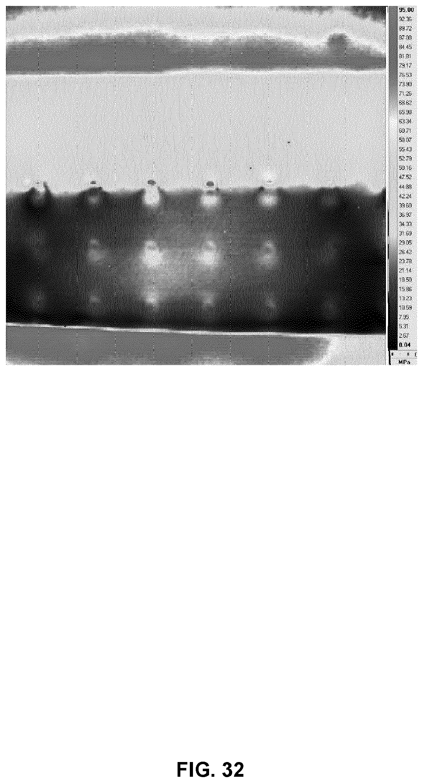

The test results revealed that the SPD doubler significantly reduces the stresses in the joint. This means that the SPD seals the fasteners and continues to do so for more than 110,000 cycles. This represents a factor more than 3.6 in the Limit of Viability (LOV) [12] of the joint. Test Panel 2 also achieved 2 times the LOV (60,000 cycles) even though there were pre existing delaminations between the skins (both upper and lower) and the honeycomb core (i.e. loss of panel stability) prior to test. Figures 31 and 32 present the stress distribution in the SPD Test Panel 2 at 18,000 cycles and 48,000 cycles respectively. Comparing Figures 26 and 31 a significant reduction in the stresses in the joint is noted. In the upper section of the picture 31, an increase in the stresses in the skin is noted at the edge of the SPD where load is being attracted up from the skin into the SPD. The stress concentrations in the SPD over each of the fasteners are also visible.

From this Example it can be seen that the SPD has remained intact, thereby ensuring that the joint is sealed. Although this study has focused on fuselage lap joints the ability of an SPD doubler to form a durable bond to both the skin and the fasteners predicts that this approach may well be applicable to other problem areas in an aircraft.

## REFERENCES:

[1] Efforts to reduce corrosion on the military equipment and infrastructure of the department of defense, Office of the Secretary of Defense, USA. Department of Defense Report; June 2007.

[2] Karthikeyan, J. 2004. Cold spray technology: International status and USA efforts. ASB Industries. 1-14.

[3] Decker MK, Smith MF. Thermal spray and cold spray analysis of density, porosity, and tensile specimens for use with LIGA applications. SAND2000-0339, Sandia National Laboratories; February 2000.

[4] Sartwell BD, Kestler R, Legg KO, Assink W, Nardi A, Schell J. Validation of HVOF WC/Co, WC/CoCr and Tribaloy 800 thermal spray coatings as a replacement for hard chrome plating on C-2/E-2/P-3 and C-130 propeller hub system components, NRL-PP-99-22-FR-01, Naval Research Laboratory, Washington; May 2003.

[5] Sakaki K. Cold spray process overview and application trends. Mater Sci Forum 2004;449-452:1305-8.

[6] Karthikeyan, J. Development of oxidation resistant coatings on GRCop-84 substrates by cold spray process. NASA-CR 2007-214706; 2007.

[7] Pepi, M. Cold spray technology for repair of magnesium rotorcraft components. NAVAIR corrosion resistant alloy workshop; 8-9, November 2006.

[8] Villafuerte J. Current and future applications of cold spray technology, Recent trends in cold spray technology: Potential applications for repair of military hardware, NATO RTO-MP-AVT-163; 2010. p. 1-14. <ftp://ftp.rta.nato.int>.

[9] Matthews N. Supersonic particle deposition (SPD) cutting edge technology for corrosion protection and damaged metallic component recover In: Proceedings 2010 SDE symposium program "Design Engineering in a SRP Environment". RAAF Williams, Melbourne, Australia; 24-25, March 2010.

[10] Stoltenhoff T. Praxair surface technologies GmbH, Germany, 8th Colloquium, HVOF spraying cold spray, Conference, Erding, Germany; 2009.

[11] Baker AA, Rose LRF, Jones R. Advances in the bonded composite repair of metallic aircraft structure", vol. I and II, Elsevier Applied Science Publishers; 2002. ISBN 0-08-042699-9.

[12] Baker AA, Jones R. Bonded repair of aircraft structure. The Hague: Martinus Nijhoff Publishers; 1988.

[13] Harwood N, Cummings WH. Thermoelastic stress analysis. Bristol: Adam Hilger; 1991.

[14] Diaz FA, Yates JR, Patterson EA. Some improvements in the analysis of fatigue cracks using thermoelasticity. Int J Fatigue 2004;26:365-76.

[15] Jones R, Pitt S. An experimental evaluation of crack face energy dissipation. Int J Fatigue 2007;28(12):1716-24 (Details on the use of lock-in thermography to measure surface stresses and energy dissipation are given in [13,14].).

[16] N.S. lyyer, N.E. Dowling, Fatigue growth and closure of short cracks, AFWoALTR- 89-3008; June 1989.

[17] Newman JC, Wu XR, Venneri SL, Li CG. Small-crack effects in high-strength aluminium alloys, NASA, editor. NASA; 1994.

[18] Jones R. A scientific evaluation of the approximate 2D theories for composite repairs to cracked metallic components, Compos Struct 87(2) (2009) 151-160.

[19] Jones R. Molent L. Critical review of the generalised frost-dugdale approach to crack growth in F/A-18 Hornet structural materials, DSTO-RR-0350; March 2010.

[20] Jones R, Molent L, Pitt S. Crack growth from small flaws. Int J Fatigue 2007;29:658-1667.

[21] Jones R, Barter S, Chen F. Experimental studies into short crack growth. Eng Fail Anal 2011. doi:10.1016/j.engfailanal.2011.03.012.

[22] Zhao ZB, Gillispie BA, Smith JR. Coating deposition by the kinetic spray process. Surf Coat Technol 2006;200:4746-54.

[23] Hussain T, McCartney DG, Shipway PH, Zhang D. Bonding mechanisms in cold spraying: the contributions of metallurgical and mechanical components. J Therm Spray Tech 2008;18(3):364-79.

[24] Pepi M, Cold spray technology for repair of magnesium rotor craft components. In: Proceedings NAVAIR corrosion resistant alloy workshop, 8-9, November 2006.

[25] Rose LRF. A cracked plate repaired with bonded reinforcements. Int J Fract 1982;18:135-44.

[26] Jones R. Numerical analysis and design. In: Baker A, Rose LRF, Jones R, editors. Advances in the bonded composite repair of metallic aircraft structure. Elsevier Applied Science Publishers; 2002. ISBN: 0-08-042699-9.

[27] Jones R. Crack patching: design aspects. In: Baker A, Jones R, editors. Bonded Repair of Aircraft Structure. The Hague: Martinus Nijhoff Publishers; 1988 [chapter 9].

[28] Wang CH, Rose. A crack bridging model for bonded plates subjected to tension and bending. Int J Solids Struct 1999; 36:1985-2014.

[29] Jones R, Chiu WK, Marshall IH. Weight functions for composite repairs to rib stiffened panels. Eng Fail Anal 2004;11(1):49-78.

[30] Hart-Smith U. Recent expansions in the capabilities of Rose's closed-form analyses for bonded crack-patching. In: Baker A, Rose LRF, Jones R, editors. Elsevier Applied Science Publishers; 2002. ISBN: 0-08-042699-9 [chapter 8].

[31] Mandelbrot BB, Passoja DE, Paullay AJ. Fractal character of fracture surfaces of metals. Nature 1984;308:721-2.

[32] Bouchaud E. Scaling properties of cracks. J Phys Condens Matter 1997;9:4319-44.

[33] Mandelbrot BB. Fractal analysis and synthesis of fracture surface roughness and related forms of complexity and disorder. Int J Fract 2006;138:13-7.

[34] Carpinteri A, Paggi M. A unified fractal approach for the interpretation of the anomalous scaling laws in fatigue and comparison with existing models. Int J Fract 2010;161:41-52.

[35] Spagnoli A. Self-similarity and fractals in the Paris range of fatigue crack growth. Mech Mater 2005;37:519-29.

[36] Saether E, Ta'asan S. A Hierarchical approach to fracture mechanics, NASA/TM-2004-213499.

[37] Carpinteri An, Spagnoli An, Vantadori S, Viappiani D. Influence of the crack morphology on the fatigue crack growth rate: a continuously-kinked crack model based on fractals. Eng Fract Mech 2008;75(3-4):579-89.

[38] http://www.dailymail.co.uk/news/article-1374574/Southwest-Airlines-fully-operational-plane-cracks-repaired.html

[39] http://www.bbc.co.uk/news/world-us-canada-12954335

[40] Jones R. and Molent L, Chapter 16, Repair of Multi-site Damage ,A. Baker, Advances in the Bonded Composite Repair of Metallic Aircraft Structure , Edited by L. R. F. Rose and Jones R., Elsevier Applied Science Publishers, 2002. ISBN 0-08-042699-9

[41] Jones R. Cairns K., Baker J., Krishnapillai K. And Hinton B., A study of the effect of CPCs on fatigue crack propagation in a representative fuselage lap joint specimen, Engineering Fracture Mechanics, doi: 10.1016/j.engfracmech.2011.11.015.

**Claims**

1. A method for preventing or inhibiting the initiation of a structural weakness in an aircraft structural joint or riveted repair; the method comprising the step of bonding a plurality of metallic particles to the aircraft structural joint or riveted repair where there is no existing structural weakness, the bonding being effected under conditions allowing the plurality of metallic particles to form a substantially continuous layer on a surface of the aircraft structural joint or riveted repair, the bonding being achieved by a cold spray process.

2. A method according to claim 1, wherein the method is for preventing the ingress of an environmental element into an aircraft structural joint or riveted repair.

3. A method according to claim 1 or claim 2 wherein at least a proportion, or substantially all, of the particles are metallic particles.

4. A method according to any one of claims 1 to 3 wherein the bonding does not involve melting or fusing of the particles.

5. A method according to any one of claims 1 to 4 wherein optionally and preferably, the cold spray process is supersonic particle deposition.

6. A method according to any one of claims 1 to 5 wherein the substantially continuous layer is at least about 0.05 mm or the substantially continuous layer has substantially even depth across the application surface.

7. A method according to any one of claims 1 to 6 wherein the aircraft structure is a lap joint and the substantially continuous layer does not extend to cover a junction between the free end of a first (1) sheet metal component of the lap joint and an underlying second (2) sheet metal component.

8. A method according to any one of claims 1 to 7 wherein the structural weakness is a crack.

9. An aircraft structural joint or riveted repair comprising a substantially continuous metallic layer, the layer being deposited on a surface of the aircraft structural joint or riveted repair where there is no existing structural weakness, the layer being capable of preventing or inhibiting the initiation of a structural weakness in the aircraft structural joint or riveted repair, wherein the layer comprises a plurality of metallic particles and is deposited on the surface of the aircraft structure by a cold spray process.

10. The aircraft structural joint or riveted repair according to claim 9, wherein the layer is capable of preventing the ingress of an environmental element in the aircraft structural joint or riveted repair.

11. The aircraft structural joint or riveted repair according to claim 9 or claim 10 wherein at least a proportion, or substantially all, of the particles are metallic particles.

12. The aircraft structural joint or riveted repair according to any one of claims 9 to 11 wherein the substantially continuous layer is deposited on the surface of the aircraft structure by a method according to any one of claims 1 to 8.

13. The aircraft structural joint or riveted repair according to any one of claims 9 to 12 wherein the substantially continuous layer is at least about 0.05 mm, or the substantially continuous layer has substantially even depth across the application surface.

14. The aircraft structural joint or riveted repair according to any one of claims 9 to 13 wherein the structural joint is a lap joint and the substantially continuous layer does not extend to cover a junction between the free end of a first (1) sheet metal component of the lap joint and the face of a second (2) sheet metal component of the joint.

15. The aircraft structural joint or riveted repair according to any one of claims 9 to 14 wherein the structural weakness is a crack.

**Patentansprüche**

1. Verfahren zum Verhindern oder Hemmen der Einleitung einer Strukturschwäche in einer Flugzeugstrukturverbindung oder -nietreparatur; wobei das Verfahren den Schritt des Bondens einer Vielzahl von Metallpartikeln an die Flugzeugstrukturverbindung oder -nietreparatur umfasst, wo keine bestehende Strukturschwäche vorliegt, wobei das Bonden unter Bedingungen erfolgt, die es erlauben, dass die Vielzahl von Metallpartikeln eine im Wesentlichen durchgängige Schicht auf einer Oberfläche der Flugzeugstrukturverbindung oder -nietreparatur bildet, wobei das Bonden durch ein Kaltspritzverfahren bewirkt wird.

2. Verfahren nach Anspruch 1, worin das Verfahren zum Verhindern des Eindringens eines Umweltelements in eine Flugzeugstrukturverbindung oder -nietreparatur dient.

3. Verfahren nach Anspruch 1 oder Anspruch 2, worin mindestens ein Anteil, oder im Wesentlichen alle, der Partikel Metallpartikel ist bzw. sind.

4. Verfahren nach einem der Ansprüche 1 bis 3, worin das Bonden nicht das Schmelzen oder Fusionieren der Partikel beinhaltet.

5. Verfahren nach einem der Ansprüche 1 bis 4, worin, wahlweise und vorzugsweise, das Kaltspritzverfahren eine Überschall-Partikelablagerung ist.

6. Verfahren nach einem der Ansprüche 1 bis 5, worin die im Wesentlichen durchgängige Schicht mindestens etwa 0,05 mm beträgt oder die im Wesentlichen durchgängige Schicht eine im Wesentlichen gleichmäßige Tiefe über die Auftragsoberfläche aufweist.

7. Verfahren nach einem der Ansprüche 1 bis 6, worin die Flugzeugstruktur eine Überlappungsverbindung ist und sich die im Wesentlichen durchgängige Schicht nicht erstreckt, um eine Verbindungsstelle zwischen dem freien Ende einer ersten (1) Metallblechkomponente der Überlappungsverbindung und einer darunterliegenden zweiten (2) Metallblechkomponente abzudecken.

8. Verfahren nach einem der Ansprüche 1 bis 7, worin die Strukturschwäche ein Riss ist.

9. Flugzeugstrukturverbindung oder -nietreparatur, umfassend eine im Wesentlichen durchgängige Metallschicht, wobei die Schicht auf einer Oberfläche der Flugzeugstrukturverbindung oder -nietreparatur abgelagert wird, wo es keine bestehende Strukturschwäche gibt, wobei die Schicht zum Verhindern oder Hemmen der Einleitung einer Strukturschwäche in der Flugzeugstrukturverbindung oder -nietreparatur fähig ist, worin die Schicht eine Vielzahl von Metallpartikeln umfasst und auf der Oberfläche der Flugzeugstruktur durch ein Kaltspritzverfahren abgelagert wird.

10. Flugzeugstrukturverbindung oder -nietreparatur nach Anspruch 9, worin die Schicht zum Verhindern des Eindringens eines Umweltelements in die Flugzeugstrukturverbindung oder -nietreparatur fähig ist.

11. Flugzeugstrukturverbindung oder -nietreparatur nach Anspruch 9 oder Anspruch 10, worin mindestens ein Anteil, oder im Wesentlichen alle, der Partikel Metallpartikel ist bzw. sind.

12. Flugzeugstrukturverbindung oder -nietreparatur nach einem der Ansprüche 9 bis 11, worin die im Wesentlichen durchgängige Schicht auf der Oberfläche der Flugzeugstruktur durch ein Verfahren nach einem der Ansprüche 1 bis 8 abgelagert wird.

13. Flugzeugstrukturverbindung oder -nietreparatur nach einem der Ansprüche 9 bis 12, worin die im Wesentlichen durchgängige Schicht mindestens etwa 0,05 mm beträgt oder die im Wesentlichen durchgängige Schicht eine im Wesentlichen gleichmäßige Tiefe über die Auftragsoberfläche aufweist.

14. Flugzeugstrukturverbindung oder -nietreparatur nach einem der Ansprüche 9 bis 13, worin die Strukturverbindung eine Überlappungsverbindung ist und sich die im Wesentlichen durchgängige Schicht nicht erstreckt, um eine Verbindungsstelle zwischen dem freien Ende einer ersten (1) Metallblechkomponente der Überlappungsverbindung und der Stirnseite einer zweiten (2) Metallblechkomponente der Verbindung abzudecken.

**15.** Flugzeugstrukturverbindung oder -nietreparatur nach einem der Ansprüche 9 bis 14, worin die Strukturschwäche ein Riss ist.

**Revendications**

**1.** Un procédé destiné à prévenir ou à inhiber le début d'une faiblesse structurale dans un joint structural ou une réparation rivetée d'un avion; le procédé comprenant l'étape consistant à lier une pluralité de particules métalliques au joint structural ou à la réparation rivetée d'un avion où il n'y a pas de faiblesse structurale existante, la liaison étant effectuée dans des conditions permettant à la pluralité de particules métalliques de former une couche sensiblement continue sur une surface du joint structural ou de la réparation rivetée d'un avion, la liaison étant réalisée par un processus de pulvérisation à froid.

**2.** Un procédé selon la revendication 1, dans lequel le procédé est destiné à prévenir la pénétration d'un élément environnemental dans un joint structural ou une réparation rivetée d'un avion.

**3.** Un procédé selon la revendication 1 ou la revendication 2 dans lequel au moins une proportion, ou sensiblement la totalité, des particules sont des particules métalliques.

**4.** Un procédé selon l'une quelconque des revendications 1 à 3 dans lequel la liaison n'implique pas la fusion ou le ramollissement des particules.

**5.** Un procédé selon l'une quelconque des revendications 1 à 4 dans lequel en option et de préférence, le processus de pulvérisation à froid est un dépôt de particules supersonique.

**6.** Un procédé selon l'une quelconque des revendications 1 à 5 dans lequel la couche sensiblement continue fait au moins environ 0,05 mm ou la couche sensiblement continue a une profondeur sensiblement uniforme sur toute la surface d'application.

**7.** Un procédé selon l'une quelconque des revendications 1 à 6 dans lequel la structure de l'avion est un joint à recouvrement et la couche sensiblement continue ne s'étend pas pour couvrir une intersection entre l'extrémité libre d'un premier (1) composant en tôle du joint à recouvrement et d'un deuxième (2) composant en tôle sous-jacent.

**8.** Un procédé selon l'une quelconque des revendications 1 à 7 dans lequel la faiblesse structurale est une fissure.

**9.** Un joint structural ou une réparation rivetée d'un avion comprenant une couche métallique sensiblement continue, la couche étant déposée sur une surface du joint structural ou de la réparation rivetée d'un avion où il n'y a pas de faiblesse structurale existante, la couche étant capable de prévenir ou d'inhiber le début d'une faiblesse structurale dans le joint structural ou la réparation rivetée d'un avion, dans lequel la couche comprend une pluralité de particules métalliques et est déposée sur la surface de la structure de l'avion par un processus de pulvérisation à froid.

**10.** Le joint structural ou la réparation rivetée d'un avion selon la revendication 9, dans lequel la couche est capable de prévenir la pénétration d'un élément environnemental dans le joint structural ou la réparation rivetée d'un avion.

**11.** Le joint structural ou la réparation rivetée d'un avion selon la revendication 9 ou revendication 10 dans lequel au moins une proportion, ou sensiblement la totalité, des particules sont des particules métalliques.

**12.** Le joint structural ou la réparation rivetée d'un avion selon l'une quelconque des revendications 9 à 11 dans lequel la couche sensiblement continue est déposée sur la surface de la structure de l'avion par un procédé selon l'une quelconque des revendications 1 à 8.

**13.** Le joint structural ou la réparation rivetée d'un avion selon l'une quelconque des revendications 9 à 12 dans lequel la couche sensiblement continue fait au moins environ 0,05 mm, ou la couche sensiblement continue a une profondeur sensiblement uniforme sur toute la surface d'application.

**14.** Le joint structural ou la réparation rivetée d'un avion selon l'une quelconque des revendications 9 à 13 dans lequel le joint structural est un joint à recouvrement et la couche sensiblement continue ne s'étend pas pour couvrir une intersection entre l'extrémité libre d'un premier (1) composant en tôle du joint à recouvrement et la face d'un deuxième (2) composant en tôle du joint.

15. Le joint structural ou la réparation rivetée d'un avion selon l'une quelconque des revendications 9 à 14 dans lequel la faiblesse structurale est une fissure.

100 mm

50mm

125mm

75mm

350 mm

125mm

50mm

Rivets

FIG. 1

**FIG. 2**

FIG. 3

Image 11
E - Mode
(ptw - module)

11,100 cycles

**FIG. 4**

**FIG. 5**

FIG. 6

SDP Al Alloy strip, 60 mm long and 10 mm wide on both sides.

The strip is 5mm from the edge that has the 2mm EDM edge notch at the centre line, see prior diagram.

10 mm

5mm from the edge at the centre line of the specimen

10 mm scarf region

60 mm

1 mm thick SDP Al Alloy strip on each side.

The SPD strip dimensions to be 60 mm long and 10 mm wide on both sides, please.

FIG. 7

FIG. 8

FIG. 9

**FIG. 10**

FIG. 11

**FIG. 12**

**FIG. 13**

**FIG. 14**

**FIG. 15**

FIG. 16

FIG. 17

**FIG. 18**

FIG. 19

**FIG. 20**

**FIG. 21**

FIG. 22

**FIG. 23A**

**FIG. 23B**

FIG. 23C

**FIG. 24**

**FIG. 25**

**FIG. 26**

**FIG. 27**

**FIG. 28**

FIG. 29

**FIG. 30**

FIG. 31

FIG. 32

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHAMPAGNE et al.** *Modelling Simul. Mater. Sci. Eng.,* 2010, vol. 18 (065011), 8
- **KARTHIKEYAN, J.** Cold spray technology: International status and USA efforts. *ASB Industries,* 2004, 1-14
- **DECKER MK ; SMITH MF.** Thermal spray and cold spray analysis of density, porosity, and tensile specimens for use with LIGA applications. *Sandia National Laboratories,* February 2000
- WC/CoCr and Tribaloy 800 thermal spray coatings as a replacement for hard chrome plating on C-2/E-2/P-3 and C-130 propeller hub system components. **SARTWELL BD ; KESTLER R ; LEGG KO ; ASSINK W ; NARDI A ; SCHELL J.** Naval Research Laboratory. Validation of HVOF WC/Co, May 2003
- **SAKAKI K.** Cold spray process overview and application trends. *Mater Sci Forum,* 2004, vol. 449-452, 1305-8
- **KARTHIKEYAN, J.** Development of oxidation resistant coatings on GRCop-84 substrates by cold spray process. *NASA-CR 2007-214706,* 2007
- **PEPI, M.** Cold spray technology for repair of magnesium rotorcraft components. *NAVAIR,* November 2006, 8-9
- **VILLAFUERTE J.** Current and future applications of cold spray technology, Recent trends in cold spray technology: Potential applications for repair of military hardware. *NATO RTO-MP-AVT-163,* 2010, 1-14, <ftp://ftp.rta.nato.int>
- Supersonic particle deposition (SPD) cutting edge technology for corrosion protection and damaged metallic component recover. **MATTHEWS N.** Proceedings 2010 SDE symposium program "Design Engineering in a SRP Environment. RAAF Williams, March 2010, 24-25
- Praxair surface technologies GmbH. **STOLTENHOFF T.** Conference. HVOF spraying cold spray, 2009
- **BAKER AA ; ROSE LRF ; JONES R.** Advances in the bonded composite repair of metallic aircraft structure. Elsevier Applied Science Publishers, 2002, vol. I and II
- Bonded repair of aircraft structure. **BAKER AA ; JONES R.** The Hague. Martinus Nijhoff Publishers, 1988
- Thermoelastic stress analysis. **HARWOOD N ; CUMMINGS WH.** Bristol. Adam Hilger, 1991

- **DIAZ FA ; YATES JR ; PATTERSON EA.** Some improvements in the analysis of fatigue cracks using thermoelasticity. *Int J Fatigue,* 2004, vol. 26, 365-76
- **JONES R ; PITT S.** An experimental evaluation of crack face energy dissipation. *Int J Fatigue,* 2007, vol. 28 (12), 1716-24
- **N.S. LYYER ; N.E. DOWLING.** Fatigue growth and closure of short cracks. *AFWoALTR- 89-3008,* June 1989
- Small-crack effects in high-strength aluminium alloys. **NEWMAN JC ; WU XR ; VENNERI SL ; LI CG.** NASA. 1994
- **JONES R.** A. scientific evaluation of the approximate 2D theories for composite repairs to cracked metallic components. *Compos Struct,* 2009, vol. 87 (2), 151-160
- **JONES R. ; MOLENT L.** Critical review of the generalised frost-dugdale approach to crack growth in F/A-18 Hornet structural materials. *DSTO-RR-0350,* March 2010
- **JONES R ; MOLENT L ; PITT S.** Crack growth from small flaws. *Int J Fatigue,* 2007, vol. 29, 658-1667
- **JONES R ; BARTER S ; CHEN F.** Experimental studies into short crack growth. *Eng Fail Anal,* 2011
- **ZHAO ZB ; GILLISPIE BA ; SMITH JR.** Coating deposition by the kinetic spray process. *Surf Coat Technol,* 2006, vol. 200, 4746-54
- **HUSSAIN T ; MCCARTNEY DG ; SHIPWAY PH ; ZHANG D.** Bonding mechanisms in cold spraying: the contributions of metallurgical and mechanical components. *J Therm Spray Tech,* 2008, vol. 18 (3), 364-79
- **PEPI M.** Cold spray technology for repair of magnesium rotor craft components. *Proceedings NAVAIR,* November 2006, 8-9
- **ROSE LRF.** A cracked plate repaired with bonded reinforcements. *Int J Fract,* 1982, vol. 18, 135-44
- the bonded composite repair of metallic aircraft structure. **JONES R.** Numerical analysis and design. Elsevier Applied Science Publishers, 2002
- Crack patching: design aspects. **JONES R.** Bonded Repair of Aircraft Structure. Martinus Nijhoff Publishers, 1988
- **WANG CH ; ROSE. A.** crack bridging model for bonded plates subjected to tension and bending. *Int J Solids Struct,* 1999, vol. 36, 1985-2014

- **JONES R ; CHIU WK ; MARSHALL IH.** Weight functions for composite repairs to rib stiffened panels. *Eng Fail Anal,* 2004, vol. 11 (1), 49-78
- **HART-SMITH U.** Recent expansions in the capabilities of Rose's closed-form analyses for bonded crack-patching. Elsevier Applied Science Publishers, 2002
- **MANDELBROT BB ; PASSOJA DE ; PAULLAY AJ.** Fractal character of fracture surfaces of metals. *Nature,* 1984, vol. 308, 721-2
- **BOUCHAUD E.** Scaling properties of cracks. *J Phys Condens Matter,* 1997, vol. 9, 4319-44
- **MANDELBROT BB.** Fractal analysis and synthesis of fracture surface roughness and related forms of complexity and disorder. *Int J Fract,* 2006, vol. 138, 13-7
- **CARPINTERI A ; PAGGI M.** A unified fractal approach for the interpretation of the anomalous scaling laws in fatigue and comparison with existing models. *Int J Fract,* 2010, vol. 161, 41-52
- **SPAGNOLI A.** Self-similarity and fractals in the Paris range of fatigue crack growth. *Mech Mater,* 2005, vol. 37, 519-29
- **SAETHER E ; TA'ASAN S.** A Hierarchical approach to fracture mechanics. *NASA/TM-2004-213499*
- **CARPINTERI AN ; SPAGNOLI AN ; VANTADORI S ; VIAPPIANI D.** Influence of the crack morphology on the fatigue crack growth rate: a continuously-kinked crack model based on fractals. *Eng Fract Mech,* 2008, vol. 75 (3-4), 579-89
- Bonded Composite Repair of Metallic Aircraft Structure. **JONES R ; MOLENT L.** Repair of Multi-site Damage. Elsevier Applied Science Publishers, 2002
- **JONES R. ; CAIRNS K. ; BAKER J. ; KRISHNAPILLAI K. ; HINTON B.** A study of the effect of CPCs on fatigue crack propagation in a representative fuselage lap joint specimen. *Engineering Fracture Mechanics*